(19) Europäisches Patentamt / European Patent Office / Office européen des brevets

(11) **EP 2 631 633 A1**

(12) **EUROPEAN PATENT APPLICATION**

(43) Date of publication:
28.08.2013 Bulletin 2013/35

(51) Int Cl.:
*G01N 21/64* (2006.01)   *G01N 23/04* (2006.01)
*G01B 11/24* (2006.01)   *G02B 21/36* (2006.01)
*G06T 9/00* (2006.01)   *G02B 21/16* (2006.01)
*G02B 27/58* (2006.01)   *H04N 13/02* (2006.01)
*H04N 13/00* (2006.01)

(21) Application number: 13168580.2

(22) Date of filing: 30.03.2009

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: 01.04.2008 US 60730

(62) Document number(s) of the earlier application(s) in accordance with Art. 76 EPC:
**09755379.6 / 2 265 932**

(71) Applicants:
• **The Jackson Laboratory**
  **Bar Harbor, ME 04609 (US)**
• **University of Maine**
  **Orono, Maine 04469-5717 (US)**

(72) Inventors:
• **Bewersdorf, Joerg**
  **Branford, CT 06405 (US)**

• **Juette, Manuel F.**
  **51503 Rosrath (DE)**
• **Gould, Travis**
  **Old Town, ME 04468 (US)**
• **Hess, Sam T.**
  **Stillwater, ME 04489 (US)**

(74) Representative: **Grünecker, Kinkeldey, Stockmair & Schwanhäusser**
**Leopoldstrasse 4**
**80802 München (DE)**

Remarks:
This application was filed on 21-05-2013 as a divisional application to the application mentioned under INID code 62.

(54) **3D biplane microscopy**

(57)   The invention provides a microscopy system configured for tracking microscopic particles in 3D, the system comprising a sample comprising luminescence particles; a sample stage for mounting the sample; at least one light source configured to illuminate an area of the sample, the at least one light source causing luminescence light from primarily one tracked particle of the luminescence particles; a beam-steering device configured to selectively move a light beam to illuminate different areas of the sample such that the luminescence light is detected; a beam-splitting device located in a detection light path that splits the luminescence light into at least two paths, the beam-splitting device creating at least two detection planes that correspond to different object planes in the sample at least one camera positioned to detect simultaneously the at least two detection planes, the number of object planes being represented in the camera by the same number of recorded regions of interest; and a controller programmable to combine a signal from the recorded regions of interest, determine a 3D trajectory of the particle at each time point of a recorded data sequence, move the beam-steering device to illuminate the different areas of the sample in accordance with corresponding positions of the one tracked particle.

FIG. 1

EP 2 631 633 A1

**Description**

**FIELD OF THE INVENTION**

The present invention relates generally to microscopic imaging and, more specifically, to three-dimensional ("3D") sub-100 nanometer resolution by biplane microscope imaging.

**BACKGROUND OF THE INVENTION**

Until about a decade ago, resolution in far-field light microscopy was thought to be limited to ~200-250 nanometers in the focal plane, concealing details of sub-cellular structures and constraining its biological applications. Breaking this diffraction barrier by the seminal concept of stimulated emission depletion ("STED") microscopy has made it possible to image biological systems at the nanoscale with light. Additional details are provided in an article titled "Far-Field Optical Nanoscopy by Stefan W. Hell (316 Science, 1153-1158, May 25, 2007), which is incorporated herein by reference in its entirety. STED microscopy and other members of reversible saturable optical fluorescence transitions ("RESOLFT") family achieve a resolution >10-fold beyond the diffraction barrier by engineering the microscope's point-spread function ("PSF"), also referred to as a "reference data set," through optically saturable transitions of the (fluorescent) probe molecules.

Lately, an emerging group of localization-based techniques has obtained similar resolution in the lateral plane. This group includes fluorescence photoactivation localization microscopy ("FPALM"), photoactivation localization microscopy ("PALM"), stochastic optical reconstruction microscopy ("STORM"), and PALM with independently running acquisition ("PALMIRA"). FPALM is described in more detail in an article titled "UltraHigh Resolution Imaging by Fluorescence Photoactivation Localization Microscopy" by Samuel T. Hess et al. (91 Biophysical Journal, 4258-4272, December 2006), which is incorporated herein by reference in its entirety. PALM is described in more detail in an article titled "Imaging Intracellular Fluorescent Proteins at Nanometer Resolution" by Eric Betzig et al. (313 Science, 1642-1645, September 15, 2006), which is incorporated herein by reference in its entirety. STORM is described in more detail in an article titled "Sub-Diffraction-Limit Imaging by Stochastic Optical Reconstruction Microscopy" by Michael J. Rust et al. (Nature Methods / Advance Online Publication, August 9, 2006), which is incorporated herein by reference in its entirety. PALMIRA is described in more detail in an article titled "Resolution of $\lambda/10$ in Fluorescence Microscopy Using Fast Single Molecule Photo-Switching" by H. Bock et al. (88 Applied Physics A, 223-226, June 1, 2007), and an article titled "Photochromic Rhodamines Provide Nanoscopy With Optical Sectioning" by J. Folling et al. (Angew. Chem. Int. Ed., 46, 6266-6270, 2007), each of which is incorporated herein by reference in its entirety. As referred to in the current application, the term photo-sensitive refers to both photo-activatable (*e.g.*, switching probes between an on state and an off state) and photo-switching (*e.g.*., switching between a first color and a second color).

While utilizing similar optical switching mechanisms, this latter group of microscopes circumvents the diffraction limit by basing resolution improvement on the precise localization of spatially well-separated fluorescent molecules, a method previously used to track, for example, conventionally labeled myosin V molecules with 1.5 nanometers localization accuracy. This method is described in more detail in an article titled "Myosin V Walks Hand-Over-Hand: Single Fluorophore Imaging With 1.5-nanometers Localization" by Ahmet Yildiz et al. (300 Science, 2061-2065, June 27, 2003), which is incorporated herein by reference in its entirety.

To resolve complex nanoscale structures by localization-based methods, the sample is labeled with photo-sensitive probes, such as photo-activatable ("PA") fluorescent probes (*e.g.*, PA proteins or caged organic dyes). Activation of only a sparse subset of molecules at a time allows their separate localization. By repeated bleaching or deactivation of the active molecules in concert with activation of other inactive probe molecules, a large fraction of the whole probe ensemble can be localized over time. The final sub-diffraction image of the labeled structure is generated by plotting the positions of some or all localized molecules.

Based on the rapid development in both RESOLFT and localization-based techniques, the impact of super-resolution far-field fluorescence microscopy on the biological sciences is expected to increase significantly. Within 2007 alone subdiffraction multi-color imaging has been reported for the first time for STED microscopy, PALMIRA, STORM, and FPALM has successfully been demonstrated in live cells. Some of these reports are included in an article titled "Two-Color Far-Field Fluorescence Nanoscopy" by Gerald Donnert et al. (Biophysical Journal, L67-L69, February 6, 2007), in an article by M. Bates, B. Huang, G.T. Dempsey, and X. Zhuang (Science 317, 1749-1753, 2007), and in an article titled "Dynamic Clustered Distribution of Hemagglutinin Resolved at 40 nanometers in Living Cell Membranes Discriminates Between Raft Theories" by Samuel T. Hess et al. ( Proc. Natl. Acad. Sci. USA 104, 17370-17375, October 30, 2007), each of which is incorporated herein by reference in its entirety.

However, the slow progress in 3D super-resolution imaging has limited the application of these techniques to two-dimensional ("2D") imaging. The best 3D resolution until recently had been 100 nanometers axially at conventional lateral resolution. Achieved by the combination of two objective lens apertures in 4Pi microscopy, it has been applied for more than a decade. This is described in more detail in an article titled "H2AX Chromatin Structures and Their Response to DNA Damage Revealed by 4Pi Microscopy" by Joerg Bewersdorf et al. (Proc. Natl. Acad. Sci. USA 103, 18137-18142, November 28, 2006), which is incorporated by reference in its entirety. Only lately first 3D STED microscopy images have been published exceeding this resolution moderately with 139 nanometer lateral and 170 nanometer axial resolution. These images are presented in more detail in an article by K. I. Willig, B. Harke, R. Medda, and S. W. Hell (Nat. Methods 4, 915-918, 2007), which is incorporated by reference in its entirety. While this represents a ~10-fold smaller resolvable volume than provided by conventional microscopy, it is still at least 10-fold larger than a large number of sub-cellular components, for example synaptic vesicles. Recently, an article (Huang et al., Science 2008) has reported first 3D STORM of thin optical sections (<600 nanometers) with sub-100 nanometer 3D resolution under reducing (low oxygen) conditions.

Moreover, current understanding of fundamental biological processes on the nanoscale (*e.g.*, neural network formation, chromatin organization) is limited because these processes cannot be visualized at the necessary sub-millisecond time resolution. Current biological research at the sub-cellular level is constrained by the limits of spatial and temporal resolution in fluorescence microscopy. The diameter of most organelles is below the diffraction limit of light, limiting spatial resolution and concealing sub-structure. Recent developments (*e.g.*, STED, FPALM, STORM, etc.) have dramatically enhanced the spatial resolution and even overcome the traditional diffraction barrier. However, comparable improvements in temporal resolution are still needed.

Particle-tracking techniques can localize small objects (typically < diffraction limit) in live cells with sub-diffraction accuracy and track their movement over time. But conventional particle-tracking fluorescence microscopy cannot temporally resolve interactions of organelles, molecular machines, or even single proteins, which typically happen within milliseconds.

The spatial localization accuracy of single particles in a fluorescence microscope is approximately proportional to $d/\sqrt{N}$ (*d* = spatial resolution; N = total number of detected fluorescence photons from the particle) in the absence of background and effects due to finite pixel size. For longer acquisition times more signal can be accumulated, hence increased temporal resolution requires a trade-off of decreased spatial localization accuracy. For bright organelles containing a few hundred fluorescent molecules, (or future fluorescent molecules with increased brightness), sufficient signal can be accumulated quickly. However, especially for 3D localization where data acquisition is far more complicated than in 2D, technical constraints arising from axial scanning and/or camera readout times limit the recording speed, and therefore, the temporal resolution.

For example, a particular 3D particle-tracking technique can track particles only with 32 milliseconds time resolution. This technique scans a 2-photon excitation focus in a 3D orbit around the fluorescent particle and determines its 3D position by analyzing the temporal fluorescence fluctuations. The temporal resolution is ultimately limited by the frequency with which the focus can revolve in 3D around the particle. This technique is described in more detail in an article titled "3-D Particle Tracking In A Two-Photon Microscope: Application To The Study Of Molecular Dynamics IN Cells" by V. Levi, Q. Ruan, and E. Gratton (Biophys. J., 2005, 88(4): pp. 2919-28), which is incorporated by reference in its entirety.

In another example, another current 3D particle-tracking technique combines traditional particle-tracking with widefield "bifocal detection" images. Particles are simultaneously detected in one plane close to the focal plane of the particle and a second plane 1 micrometer out of focus. The lateral and axial coordinates are derived from the 2 images. In accordance with this technique, the temporal resolution is limited to the 2-50 milliseconds range, and the localization accuracy is limited to the 2-5 nanometer range. Additional details are described in an article titled "Three-Dimensional Particle Tracking Via Bifocal Imaging" by E Toprak et al. (Nano Lett., 2007, 7(7): pp. 2043-45), which is incorporated by reference in its entirety. As such, advances in temporal resolution to sub-millisecond levels have been limited only to 2D imaging.

In general, determining the 3D position of a particle by any of the methods mentioned above requires fitting a model function to the respective experimental data. The particle position (and also, typically, the particle brightness and background value) can be deduced from the parameters that fit the experimental data best, according to a chosen figure of merit. In most cases, an analytical function is used to reasonably model the characteristics that dominantly describe the 3D particle position, *e.g.*, the diameter of the defocused image or the particle ellipticity in the case of astigmatism. The model function is calibrated with imaged particles located at known positions to achieve mapping of the determined fit parameters to real spatial positions.

This indirect method, especially of acquiring the *z*-position from abstract fit parameters such as ellipticity or ring diameter, is problematic, however, because it is prone to artifacts in the analysis process. Experimental deviations from the theoretical descriptions by the model function can lead to divergence between real and measured particle positions. Additionally, every model function is limited to a certain optical setup and weighs the information content of the raw data differently. This prevents a direct comparison of different optical setups.

Thus, there is a need for a microscopy system that can provide 3D imaging with resolution below 100 nanometers in all three dimensions. Another need is directed to achieving particle-tracking in 3D with a temporal resolution below 1 millisecond for enabling visualization of dynamic sub-cellular processes. The present invention is directed to satisfying one or more of these needs and solving other problems.

## SUMMARY OF THE INVENTION

According to one embodiment, a microscopy system is configured for creating 3D images from individually localized probe molecules. The microscopy system includes a sample stage, an activation light source, a readout light source, a beam splitting device, at least one camera, and a controller. The activation light source activates probes of at least one probe subset of photo-sensitive luminescent probes, and the readout light source causes luminescence light from the activated probes. Optionally, the activation light source and the readout light source is the same light source. The beam splitting device splits the luminescence light into at least two paths to create at least two detection planes that correspond to the same or different number of object planes of the sample. The camera detects simultaneously the at least two detection planes, the number of object planes being represented in the camera by the same number of recorded regions of interest. The controller is programmable to combine a signal from the regions of interest into a 3D data set.

According to another embodiment, a method for creating 3D images from individually localized probe molecules includes mounting a sample on a sample stage, the sample having a plurality of photo-sensitive luminescent probes. In response to illuminating the sample with an activation light, probes of at least one probe subset of the plurality of photo-sensitive luminescent probes are activated. In response to illuminating the sample with a readout light, luminescence light from the activated probes is caused. The luminescence lights is split into at least two paths to create at least two detection planes, the at least two detection planes corresponding to the same or different object planes in the sample. At least two detection planes are detected via a camera. The object planes are recorded in corresponding recorded regions of interest in the camera. A signal from the regions of interest is combined into a 3D data stack.

According to yet another embodiment, a microscopy system is configured for tracking microscopic particles in 3D. The system includes a sample, a sample stage, at least one light source, a beam-steering device, a beam splitting device, at least one camera, and a controller. The sample, which includes luminescence particles, is mounted to the sample stage. The light source is configured to illuminate an area of the sample to cause luminescence light, primarily, from one tracked particle of the luminescence particles. The beam-steering device is configured to selectively move a light beam to illuminate different areas of the sample such that the luminescence light is detected. The beam splitting device, which is located in a detection light path, splits the luminescence light into at least two paths to create at least two detection planes that correspond to different object planes in the sample. The camera is positioned to detect simultaneously the at least two detection planes, the number of object planes being represented in the camera by the same number of recorded regions of interest. The controller is programmable to combine a signal from the recorded regions of interest, determine a 3D trajectory of the particle at each time point of a recorded data sequence, and move the beam-steering device to illuminate the different areas of the sample in accordance with corresponding positions of the one tracked particle.

According to yet another embodiment, a method for tracking microscopic particles in 3D includes mounting a sample on a sample stage, the sample including luminescent particles. A small area of the sample is illuminated to cause luminescence light from primarily one particle of the luminescent particles. The light beam is selectively moved to illuminate different areas of the sample to track movement of the one particle, the different areas including the small area of the sample and corresponding to respective positions of the one particle. The luminescence light is split into at least two paths to create at least two detection planes that correspond to the same or different number of object planes in the sample. The at least two detection planes are detected simultaneously. The number of object planes is represented in a camera by the same number of recorded regions of interest. Based on a combined signal from the recorded regions of interest, a 3D trajectory of the one particle is determined at each time point of a recorded data sequence.

According to yet another embodiment, a microscopy system is configured for creating 3D images from individually localized probe molecules. The microscopy system includes an activation light source, a readout light source, a beam splitting device, at least one camera, and a controller. The activation light source is configured to illuminate a sample with an activation light, the activation light source being configured to activate probes of at least one probe subset of the plurality of photo-sensitive luminescent probes. The readout light source is configured to illuminate the sample with a readout light, the readout light source being configured to cause luminescence light from the activated probes. The beam splitting device is located in a detection light path that splits the luminescence light into at least two paths, the beam splitting device creating at least two detection planes that correspond to the same or different number of object planes of the sample. The camera is positioned to detect simultaneously the at least two detection planes, the number of object planes being represented in the camera by the same number of recorded regions of interest. The controller is programmable to combine a signal from the regions of interest into a 3D data stack, to calculate a figure of merit as a measure of the difference between imaged pixel data and a reference data set $h_0(\xi_l)$ modifiable by at least one parameter, and to optimize the figure of merit by adjusting the at least one parameter.

Additional aspects of the invention will be apparent to those of ordinary skill in the art in view of the detailed description of various embodiments, which is made with reference to the drawings, a brief description of which is provided below.

## BRIEF DESCRIPTION OF THE DRAWINGS

FIG. 1 is a schematic view illustrating a biplane microscope setup for Fluorescence Photoactivation Localization Microscopy (FPALM), according to one embodiment.

FIG. 2 is a schematic view illustrating a biplane microscope setup, according to an alternative embodiment.

FIG. 3 is a schematic view illustrating a fluorescent particle image on a CCD chip.

FIG. 4A is a graph representing an axial resolution measured from an axial profile of caged fluorescein-labeled antibodies.

FIG. 4B is a representative image showing added-up projections of a data set in three different orientations for the axial resolution measured in FIG. 4A.

FIG. 5A is a representative image of a data set for beads labeled with caged fluorescein at an axial position of 300 nanometers.

FIG. 5B illustrates a representative image of a resulting data set for the beads of FIG. 5A at an axial position of 100 nanometers.

FIG. 5C illustrates a representative image of a resulting data set for the beads of FIG. 5A at an axial position of -100 nanometers.

FIG. 5D illustrates a representative image of a resulting data set for the beads of FIG. 5A at an axial position of -300 nanometers.

FIG. 5E illustrates a representative image of a resulting data set for the beads of FIG. 5A at an axial position of -500 nanometers.

FIG. 5F illustrates a volume-rendered representation of the data set illustrated in FIGs. 5A-5E.

FIG. 6 is a schematic view illustrating adjustment of a biplane microscope setup, according to an alternative embodiment.

FIG. 7A is a schematic view illustrating a fluorescent particle image on a CCD chip when the particle is in focus, in a first position.

FIG. 7B is a schematic view illustrating the fluorescent particle image of FIG. 7A when the particle is out of focus, in a second position.

FIG. 7C is a schematic view illustrating the fluorescent particle image of FIG. 7B when the particle is in focus, in a third position.

FIG. 8 is a diagrammatic representation of an exemplary embodiment of a photoactivation localization microscopy method.

FIG. 9 is a diagrammatic representation of an exemplary embodiment of a single particle tracking method.

FIG. 10 is a diagrammatic representation of an exemplary conventional embodiment of a non-iterative localization algorithm.

FIG. 11 is a diagrammatic representation of an exemplary conventional embodiment of an iterative localization algorithm.

FIG. 12 is a diagrammatic representation of an exemplary embodiment of a localization algorithm.

FIG. 13 is a diagrammatic representation of an exemplary embodiment of an algorithm for calculating a figure of merit.

FIG. 14 is a diagrammatic representation of an exemplary embodiment of a Fourier-Transform based Shift Algorithm.

## DETAILED DESCRIPTION

While this invention is susceptible of embodiment in many different forms, there is shown in the drawings and will herein be described in detail preferred embodiments of the invention with the understanding that the present disclosure is to be considered as an exemplification of the principles of the invention and is not intended to limit the broad aspect of the invention to the embodiments illustrated.

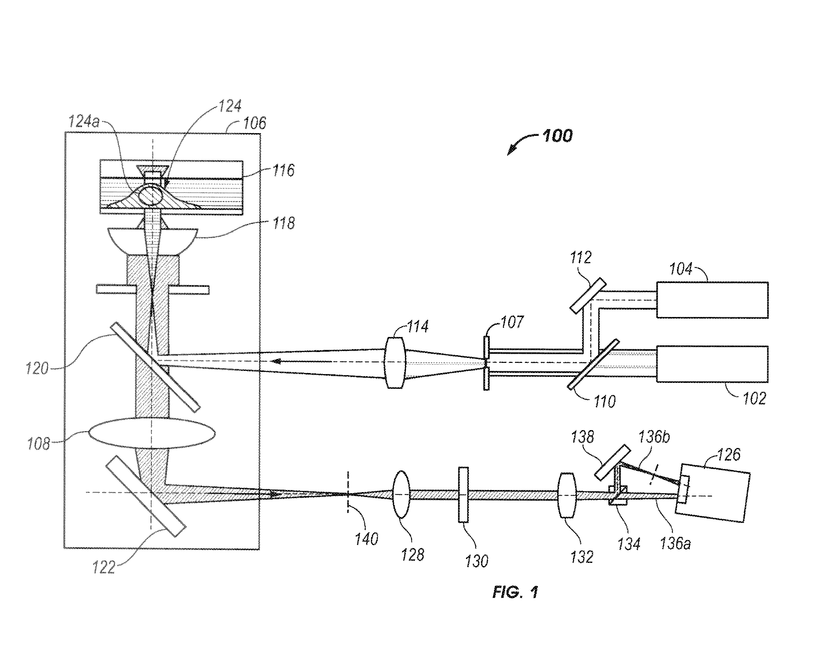

Referring to FIG. 1, a biplane ("BP") microscope system 100 allows 3D imaging at an unmatched resolution well below 100 nanometers in all three dimensions, resulting in at least a 100-fold smaller resolvable volume than obtainable by conventional 3D microscopy. The BP microscope system 100 is optionally a BP FPALM system, which is generally based on a conventional FPALM design. However, in contrast to conventional FPALM design, the BP microscope system 100 includes a modified detection path that allows the simultaneous detection from two focal planes. The simultaneous detection of two planes for localization-based super-resolution microscopy speeds up the imaging process by making axial scanning unnecessary, and more importantly, in contrast to scanning-based systems, eliminates localization artifacts caused by abrupt blinking and bleaching common to single molecules. The BP microscope system 100 can optionally be located on an air-damped optical table to minimize vibrations.

In addition to achieving 3D particle localization down to the nanometer range accuracy, the BP microscope system 100 can also achieve temporal resolution <1 milliseconds. As such, in addition to being a BP FPALM system, the BP microscope system 100 can also be a next-generation 3D particle-tracking microscope ("3D PTM") for providing unprecedented temporal and spatial resolution when tracking fluorescent particles in live cells in 3D. FPALM and particle-tracking are just some exemplary applications of the BP microscope system 100. To achieve unprecedented temporal resolution at least as short as 0.3 milliseconds, the BP microscope system 100 tracks one particle at a time (in contrast to conventional 2D and 3D tracking techniques that visualize the entire field). Additionally, the BP microscope system 100 can include a detection scheme without any moving parts that detects simultaneously two axially shifted detection planes.

In contrast to current PTM techniques, the BP microscope system 100 can include a focused laser beam for excitation combined with spatially limited detection. Background light is filtered out to avoid localization disturbances and to increase sensitivity in samples thicker than about 1 micrometer. This enables particle-tracking even in tissue sections. To follow a particular particle over several microns in 3D, the BP microscope system 100 can include, for example, high-speed piezo-mirrors and a fast piezo-driven sample stage. The combination of focused excitation and feedback-driven beam-tracking reduces the background and enhances the speed limit by approximately one order of magnitude. Optionally, a second (different) luminescence color can be detected to enable correlative studies of the movement of the tracked particle.

Illumination for readout and activation can be provided by a readout laser 102, operating typically at 496 nanometers, and an activation laser 104 (*e.g.*, 50 mW, Crystalaser), operating typically at 405 nanometers. The readout laser 102 is optionally a water-cooled Argon laser (*e.g.*, Innova 70, coherent Inc.) that can provide 458, 472, 488, 496, or 514 nanometers for readout illumination. Optionally, the wavelength of the readout laser 102 is selected to minimize activation of inactive probes of a plurality of photo-sensitive probes of a sample 124. Optionally yet, the readout laser 102 and the activation laser 104 can be the same source. For example, the readout laser 102 can perform both the readout functions and the activation functions, without requiring the use of the activation laser 104. According to one embodiment, at least one illuminated area of the sample 124 is a relatively small area, having, for example, a general diameter that is less than about three times an Airy disk diameter.

Both lasers 102, 104 are combined, via a first dichroic beam splitter 110, and coupled, via a second dichroic beam splitter 120, into a microscope stand 106 equipped with a 63x 1.2NA water immersion tube lens 108 after passing through a field aperture 107. Both lasers 102, 104 can be switched on and off by software-controlled electrical shutters (*e.g.*, SH05, Thorlabs). Other components that may be included along the path between the lasers 102, 104 and the microscope stand 106 are a first mirror 112 and a first lens 114.

The microscope stand 106 can have a plurality of components, including a sample stage 116 and an objective 118. The sample 124, including for example a biological cell 124a is generally positioned on the sample stage 116. The sample stage 116 can be a mechanical stage or a three-axis piezo stage (*e.g.*, P-733.3DD, Physik Instrumente). Other components, which are not shown, may include shutters in front of the lasers 102, 104 and further optics for folding the beam path.

Fluorescence is collected by the objective 118, passes through a second dichroic beam splitter 120 (which reflects the laser light) and is focused by the tube lens 108 via an optional second mirror 122 (*e.g.,* a piezo-driven mirror) into an intermediate focal plane 140. The focal plane 140 is imaged by two lenses - a second lens 128 and a third lens 132 - onto a high-sensitivity EM-CCD camera 126 (*e.g.*, DU897DCS-BV iXon, Andor Technology). Scattered laser light is attenuated by bandpass and Raman edge filters (*e.g.*, Chroma and Semrock), such as filter 130.

The detection scheme can be achieved by moving the CCD camera 126 out of the standard image plane closer to the tube lens 108 and thereby shifting the corresponding focal plane ~350 nanometers deeper into the sample. A beam splitter cube 134 is placed into a focused light path 136a in front of the CCD camera 126. The beam splitter cube 134 redirects a reflected light path 136b via a third mirror 138 towards the CCD camera 126 to form a second image in a different region of the same CCD. Due to the longer optical path, this second image corresponds to a focal plane ~350 nanometers closer to the objective 118 than the original focal plane.

The BP microscope system 100, using a single camera, is straightforward to implement and avoids synchronization problems between separate cameras. The BP microscope system 100 features a reasonable field of view of ~20 x 50 micrometers$^2$ (pixel size corresponding to ~100 nanometers in the sample 124; 512 x 512 pixels), sufficient to image large portions of a cell. The BP microscope system 100 is able to image 100 frames per second with a field of view of 10 to 20 micrometers in length and 2 x 2 binning. The use of the CCD camera 126, which features negligible readout noise due to its on-chip electron multiplication, avoids additional noise that would otherwise result from splitting the light up into two fields as required for BP detection. Combined with the fact that there is minimal loss of fluorescence detection efficiency, this exemplary BP microscope system 100 expands conventional FPALM to 3D imaging without significant drawbacks.

BP FPALM technology is compatible with live cell imaging and can be expanded to multicolor imaging (even realizable on the same CCD detector). BP FPALM can record 3D structures in a ~1 micrometer thick z-section without scanning. Larger volumes can be recorded by recording BP FPALM data at different sample positions. To minimize activation of out of focus PA molecules, BP FPALM can be combined with a 2-photon ("2P") laser scanner. 2P excitation-mediated activation is directed to diffraction-limited planes of ~800 nanometers thickness, a thickness that is compatible with the axial detection range of BP FPALM. BP FPALM therefore has the potential of imaging specimens such as cell nuclei or tissue sections far exceeding 1 micrometer in thickness.

Moreover, combined with or without 2P excitation, BP FPALM can be readily implemented in practically every existing FPALM, PALM, PALMIRA or STORM instrument. BP FPALM therefore provides the means to investigate a large variety of biological 3D structures at resolution levels previously far out of reach.

Optionally, BP FPALM detected luminescence from activated probes is fluorescence or scattered light. In an alternative embodiment, the activation of activated probes is achieved via a non-linear process that limits the activation to a plane of diffraction-limited thickness.

For PSF measurement, according to one example, 100 nanometer diameter yellow-green fluorescent beads (Invitrogen, F-8803) can be attached to a poly-L-lysine coated cover slip. The sample can be mounted on a piezo stage and imaged in the BP FPALM setup with 496 nm excitation. Typically, 101 images at z-positions ranging from - 2.5 to +2.5 micrometers with 50 nanometers step size are recorded. The same bead is imaged 2 to 3 times to check for drift and to correct for bleaching. To reduce noise, the data set can be smoothed in Imspector with a Gaussian filter of sub-diffraction size. Additionally, the data set can be corrected for mono-exponential bleaching, cropped to appropriate size and to be centered and normalized to 1.

Use of two focal planes for z-position determination is generally sufficient for particle localization under the constraints that (1) a sparse distribution of particles is analyzed (no overlapping signal within the size of one PSF) and (2) the axial position of the particle is close to one of the detection planes or lies between them. For example, to evaluate the range and accuracy of z-localization, 40 nanometers diameter fluorescent beads (FluoSpheres, F8795, Invitrogen) were imaged on a cover slip over 1,000 frames. A piezo-driven sample stage was moved by one 100 nanometers z-step every 100 frames. Localization analysis of the BP images reproduced that z-movement very accurately with $\sigma \approx 6$ to 10 nanometers axial localization accuracy. The beads could be localized over a range of 800 nanometers exceeding the distance between the two detection planes (in this case 500 nanometers) by more than 50%.

In one example, the accumulation time per frame is typically 10 milliseconds. In this example, electron multiplying gain is set to 300, the readout is 2 x 2 binned, only the region occupied by two recorded regions of interest ("ROIs") is read out, and, typically, 5,000 to 50,000 frames are recorded.

Optionally, at least some of the ROIs are detected at different wavelengths by including suitable detection filters in the BP microscope system 100. In alternative embodiments, at least some of the ROIs are detected at different polarization directions by including suitable polarization optics in the BP microscopy system 100.

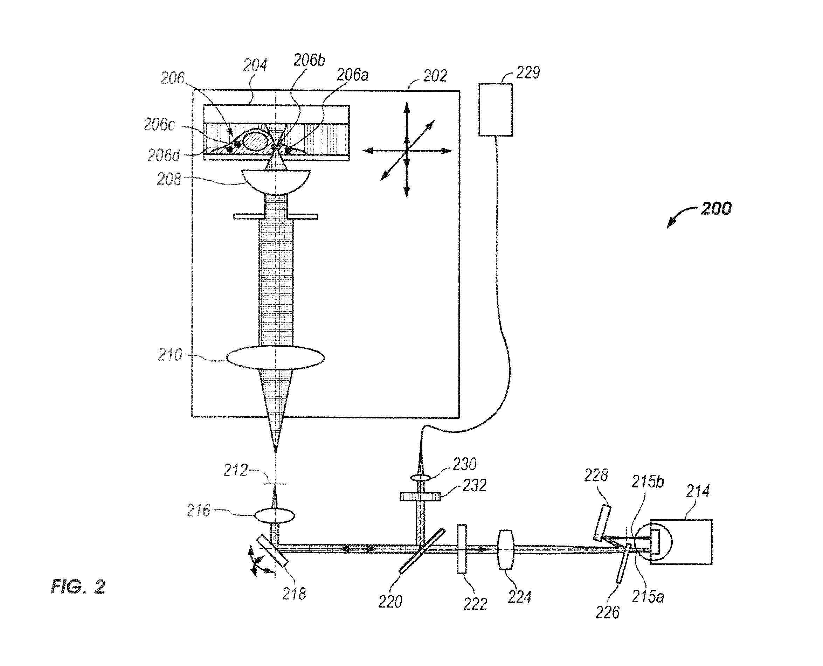

Referring to FIG. 2, a BP microscope system 200 is shown according to an alternative embodiment. The BP microscope system 200 includes a microscope stand 202 having a piezo-driven sample stage 204 on which a sample 206 is positioned. The sample 206 includes a plurality of fluorescent particles 206a-206d. The microscope stand 202 further includes an objective 208 and a first lens 210.

Additional components are positioned between a focal plane 212 and the CCD camera 214 along a fluorescence light path 215. Specifically, the components include a second lens 216, a beam-steering device 281 (e.g., a piezo-driven mirror), a dichroic beam splitter 220, a bandpass filter 222, a third lens 224, a neutral 50:50 beam splitter 226, and a mirror 228. Optionally, the beam-steering device 218 can include generally a focusing optical element that moves illumination and detection focal planes axially to follow the tracked particle. In yet another example, the beam-steering device 218 can include a phase-modulating device that moves an illuminated area laterally and illumination and detection focal planes axially to follow the tracked particle. Optionally yet, more than one piezo-driven mirror 218 can be included in the BP microscope system 200.

A polarized laser beam from a laser 229 is coupled into the microscope stand 202 and focused into the sample 206 by the objective 208. A fourth lens 230 and a $\lambda/4$ plate 232 are positioned between the laser 229 and the dichroic beam splitter 220.

The focus can be positioned in the region of interest by moving the sample stage 204 and the beam-steering device 218. The fluorescence emerging from the focal region is collected by the objective 208 and is imaged onto the CCD camera 214 via the first lens 210, the second lens 216, and the third lens 224. The dichroic beam splitter 220 and the bandpass filter 222 filter out scattered excitation light and other background light.

The neutral 50:50 beam splitter 226 splits the fluorescence light into two beam paths, a transmitted beam 215a and a reflected beam 215b. The transmitted beam 215a images light emitted from a plane deeper in the sample onto one area of the CCD chip. The reflected beam 215b images light from a plane closer to the objective onto another well-separated area to avoid cross-talk.

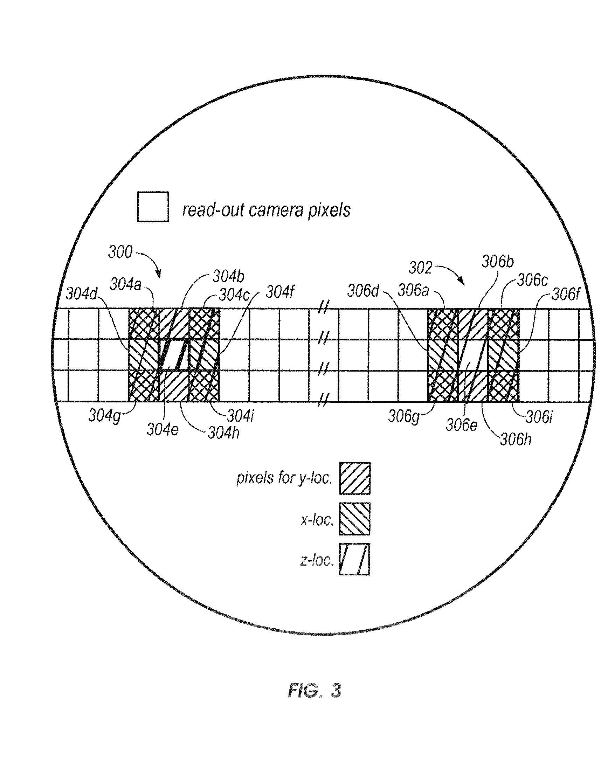

Referring to FIG. 3, two ROIs on the CCD chip represent two focal planes in the sample 206 (illustrated in FIG. 2), typically 700 nanometers apart, arranged like wings of a biplane. The two ROIs include a transmitted ROI 300 and a reflected ROI 302, each having nine pixels showing an image of the fluorescent particle 206b from the sample 206. The dashed areas 304a-304i, 306a-306i depict the pixels that are used for tracking the fluorescent particle 206b. Thus, the two 9-pixel-areas 304a-304i, 306a-306i represent in general the position of the particle 206b in 3D.

The fluorescent particle 206b, which is generally smaller than the laser focus and located in the focal region, is excited homogeneously and 3 (binned) lines (*i.e.,* the two 9-pixel-areas represented by dashed areas 304a-304i, 306a-306i) of the CCD chip arranged around the laser focus image are read out at every time point. Particles laterally shifted with respect to the laser focus center will appear shifted on the CCD chip. For the z direction, the two 9-pixel-areas 304a-304i, 306a-306i act in the same was as two confocal pinholes in different planes: if the particle 206b moves axially, the signal will increase in one of the 9-pixel-area and decrease in the other 9-pixel-area. An axial shift will be represented by a sharper intensity distribution in one of the two 9-pixel-areas depending on the direction of the shift.

The 3D position can be determined by subtracting different pixel values of the two 9-pixel-areas from each other. For the axial coordinate (z-axis), the sum of all pixels from one 9-pixel-area can be subtracted from the other 9-pixel-area. The fact that the lateral information is preserved in the 9-pixel-areas allows for lateral localization of the particle 306b at the same time. For the lateral x-axis (or y-axis) direction, the signal collected in the left columns 304a, 304d, 304g, 306a, 306d, 306g (or upper rows: 304a, 304b, 304c and 306a, 306b, 306c) of both 9-pixel-areas 300 and 302 can be subtracted from the one in the right columns 304c, 304f, 304i, 306c, 306f, 306i (or lower rows: 304g, 304h, 304i and 306g, 306h, 306i). Calculations show that the determined values are approximately proportional to the particle position offset of the center as long as the position stays in a range of +/- 250 nanometers axially and +/- 100 nanometers laterally. In a simple feedback loop, these values can be fed back to piezo controllers tilting piezo mirrors and moving the sample stage piezo to re-center the particle in the 9-pixel-areas after every measurement. Optionally, for larger movements up to about double the linear ranges, the position can be determined by taking the image shape and brightness into account in the data analysis to increase the tracking range.

According to an alternative embodiment, the pixels of the transmitted ROI 300 (on the left) show a brighter image than the pixels of the reflected ROI 302 (on the right). For example, the top-right dashed areas 304b, 304c, 304e, 304f of the transmitted ROI 300 are generally brighter than the other 5 pixels in the same ROI 300 and than all pixels of the reflected ROI 302 As such, the fluorescent particle 206b is located axially more towards the focal plane 140 imaged on transmitted ROI 300 and is shifted by about half the diffraction limit toward the right and top relative to the excitation focus.

The signal from the two ROIs 300, 302 can also be combined into a 3D data stack (2 pixels in z; x and y dimensions are determined by the size of the ROIs 300, 302). Data analysis is a generalization of standard FPALM methods to 3D. Instead of a Gaussian, an experimentally obtained 3D-PSF can be fit to each data set consisting of the pixels around each detected probe molecule. The x, y and z-coordinates of each molecule are determined from the best fit of the molecule image with the PSF.

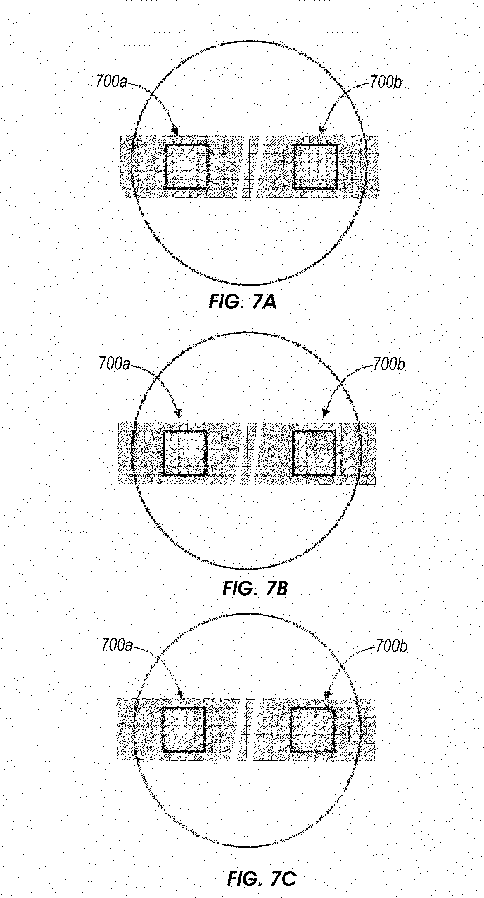

For BP FPALM, typically but not necessarily, larger ROIs 300, 302 are used to allow localization of particles over a larger field of view. Also, several particles can be present in the same ROI and still be analyzed separately. Slight variations in the magnification and rotation between the two detection areas may be corrected by software before combination of the two ROIs 300, 302 into a 3D data stack. The slight difference in the tilt of the focal planes between the two ROIs 300, 302 is negligible because of the large axial magnification (proportional to the lateral magnification squared). The analysis of the 3D data can be seen as the generalization of standard 2D FPALM analysis to 3D. Particles are identified in the z-projected images by iteratively searching for the brightest pixels and eliminating this region in the subsequent search until a lower intensity threshold has been reached. The raw data may be cut out in each ROI 300, 302 around each found particle in a square window of, for example, 10-19 pixels long and wide. Instead of a 2D Gaussian, a theoretical or experimentally obtained 3D-PSF can be fitted to the data sets in this cutout window using a simplex fitting algorithm adapted from Numerical Recipes in C, or a different algorithm. For example, the algorithm can be a localization algorithm that is independent of theoretical models and, therefore, is generally applicable to a large number of experimental realizations. A more detailed description of the localization algorithm is provided below, after the description of FIGs. 7A-7C.

From the resulting best fitting x, y and z-coordinates, the localized position is extracted and stored. Additionally, amplitude, background, the deviation from the cutout windows center, the number of iterations and the chi square value are stored, which allow later determination of the quality of the fit. The stored list of fit results is analyzed and translated into 3D data sets of customizable voxel sizes. The fit amplitude is used as the voxel intensity for every molecule found that fulfills the user-defined quality criteria. For operation without the piezo stage, the camera software (Solis, Andor Technology) is used for data recording. Software to operate the microscope with the piezo stage, for fitting, and to create 3D data sets, may be programmed in LabView 8.2 (National Instruments). Imspector (Andreas Schoenle, Max Planck Institute for Biophysical Chemisty, Goettingen, Germany) is used for display and analysis of 3D data sets. 3D rendered images may be created using Amira.

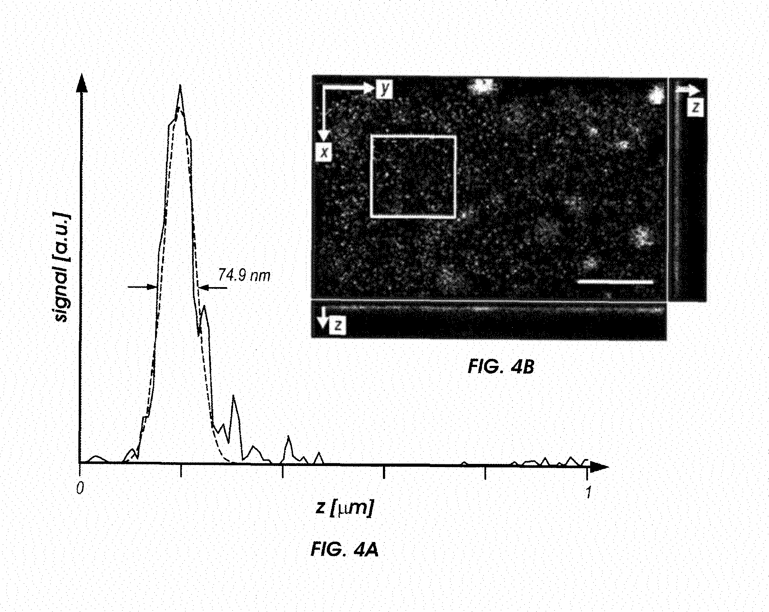

Referring to FIG. 4A, a graph illustrates the axial resolution measured using a BP FPALM setup. Specifically, the axial resolution is measured from an axial profile of caged fluorescein-labeled antibodies on a covers slip and embedded in 87% glycerol. The black line represents raw data and the dashed line represents a Gaussian fit.

From the axial profile, a full-width-at-half-maximum ("FWHM") distribution of 75 nanometers is measured, which is about 10-fold below the axial FWHM of measured PSF (which represents the axial resolution of conventional diffraction-limited microscopy). Since localization-based resolution is proportional to the diffraction-limited PSF size and the axial FWHM of a widefield 1.2NA PSF is ~250% larger than the lateral FWHM, the measured z-localization precision is consistent with x and y-resolution of 20 to 40 nanometers previously obtained in FPALM and PALM.

Referring to FIG. 4B, an inset shows added-up projections of the data set (of FIG. 4A) in three different orientations. The white box marks the region used to generate the axial profile. The scale bar of the original images was 2 micrometers.

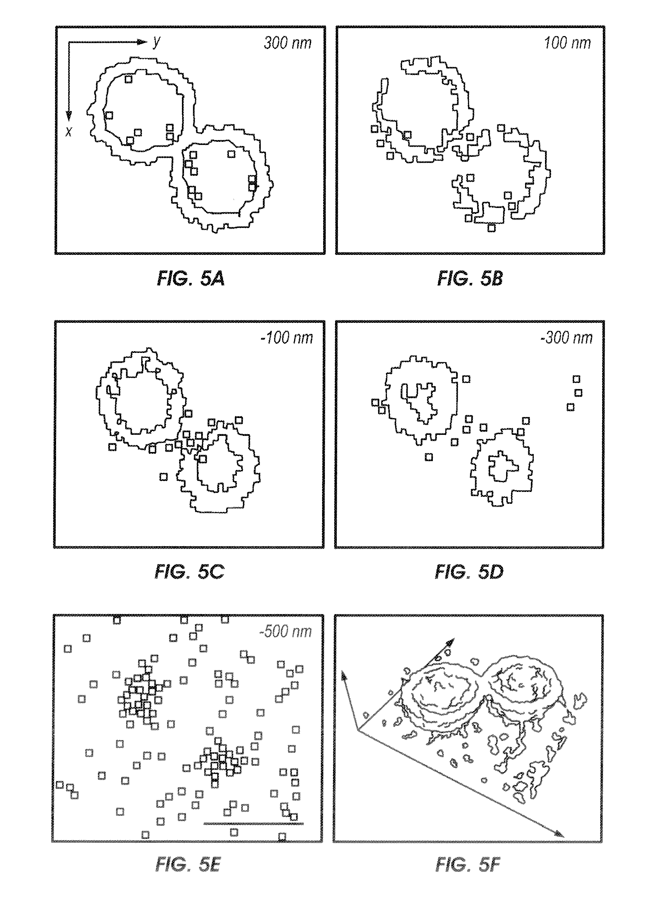

Referring to FIGs. 5A-5E, 3D BP FPALM imaging of 2 micrometers diameter beads labeled with caged fluorescein shows data sets at different axial positions. Specifically, representative 100 nanometer thick xy images of the resulting data set are illustrated at z = +300 nanometers, +100 nanometers, -100 nanometers, -300 nanometers, and -500 nanometers, respectively. The data shown in all planes 5A-5F is recorded simultaneously without scanning. Especially to image samples thicker than 1 micrometer, the sample stage can be moved after finishing recording at one sample position to access different sample depth positions and the data recording process is repeated until all sample positions of interest have been recorded.

Referring to FIG. 5F, a volume-rendered representation is shown based on the data sets of FIGs. 5A-5E. The curved surface of the bead is nicely reproduced over nearly 1 $\mu$m in depth without scanning. The optical images show well-below 100 nanometers resolution in all three dimensions. With approximately 30 x 30 x 80 nanometers[3], the resolvable volume is ~500-fold below the diffraction-limited observation volume and represents the smallest observation volume achieved in a far-field light microscope.

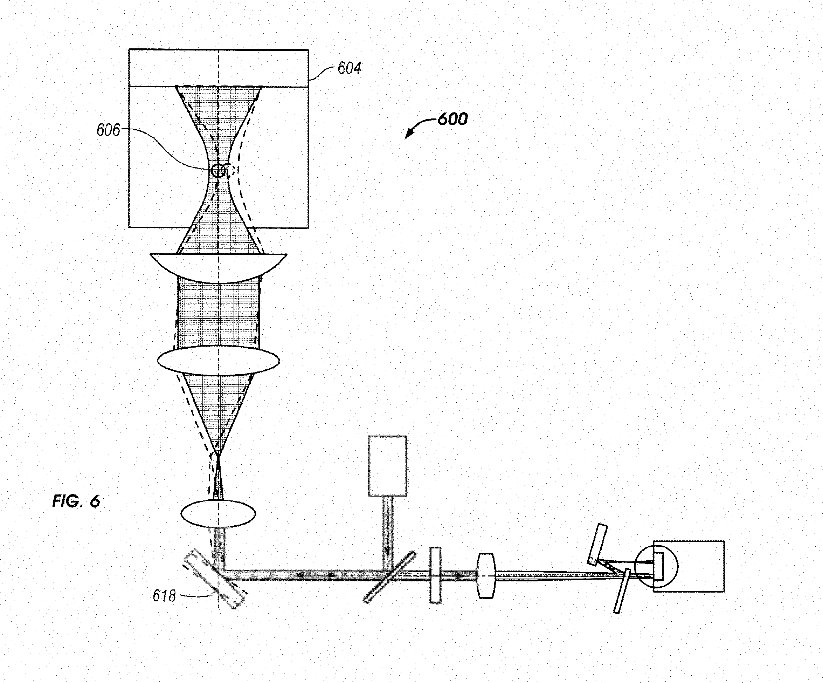

Referring to FIG. 6, a BP microscope system 600 is illustrated to show the tracking of a single particle 606 positioned on a sample stage 604. The BP microscope system 600 is generally similar to the BP microscope system 300 described above in reference to FIG. 3.

As the single particle 606 moves relatively to the sample stage 604 from a first position (indicated in solid line) to a second position (indicated in dashed line), the fluorescence light beam is adjusted by tilting one or more piezo-mounted mirrors or adjusting alternative beam-steering devices 618. In the exemplary scenario, the piezo-mounted mirror 618 is tilted counterclockwise from a first position (indicated in solid line) to a second position (indicated in dashed line). The rotation of the mirror 618 steers the fluorescence light beam on the camera as well as the excitation light beam focusing into the sample and coming from the laser to correct for sideways movement of the particle 606. The mirror 618 is rotated until the excitation light beam is again centered on the particle 606.

Optionally, the sample stage 604 is moved up or down to correct for vertical movement. Alternatively, a suitable beam-steering device 618 refocuses the beam vertically. After the necessary adjustments are made to track the particle 606, the positions of the piezo and stage are recorded to reconstruct large scale movement in post-processing.

Referring to FIGs. 7A and 7B, two insets show the images recorded when a particle moves from a first position to a second position as described above in reference to FIG. 6. In FIG. 7A, a transmitted ROI 700a and a reflected ROI 700b are recorded on a CCD chip when the particle is in the first position. The pixels of the transmitted ROI 700a show the same focus and intensity as the pixels in the reflected ROI 700b. A black box surrounds a general 5 x 5 pixel area of interest.

When the particle moves to the second position, as shown in FIG. 7B, the transmitted ROI 700a and the reflected ROI 700b change such that the respective pixels in the area of interest are now out of focus and of different intensity. For example, the pixels of the transmitted ROI 700a are now generally brighter (i.e., more intense) than in the first position, and off-center with respect to the area of interest (i.e., up and to the right). Similarly, the pixels of the reflected ROI 700b are now generally less bright (i.e., less intense) than in the first position, and off-center with respect to the area of interest (i.e., up and to the right).

Referring to FIG. 7C, the fluorescence light beam has now been steered to center it on the particle 606 in the second position. The pixels of the transmitted ROI 700a and of the reflected ROI 700b are generally similar, if not identical, to the pixels illustrated in the first position of the particle 606 (shown in FIG. 7A). Specifically, the pixels are generally centered within the area of interest and are now of similar intensity in both the transmitted ROI 700a and the reflected ROI 700b.

Various aspects of the present invention may be used alone, in combination, or in a variety of arrangements not specifically discussed in the embodiments described in the foregoing, and the aspects of the present invention described herein are not limited in their application to the details and arrangements of components set forth in the foregoing description or illustrated in the drawings. The aspects of the invention are capable of other embodiments and of being practiced or of being carried out in various ways.

### 3D Particle Localization Algorithm

Referring to the 3D particle localization algorithm, experimentally obtained 3D reference data sets are used to fit data sets obtained by either a multi-plane approach or an astigmatism approach. Practically, all raw data that contributes to the image of a particle is taken into account by the fitting process according to the particle's statistical weight, which is especially relevant for photon-limited applications such as imaging single molecules. Additional calibration steps are generally not necessary because the raw data and the fit reference data set are acquired by the same setup.

Based on performed experiments, the localization algorithm converges in close to 100% of the cases over a range of 1 to 2 $\mu$m by a fraction $\Phi$ of images in which the particle could be localized correctly. The fraction $\Phi$ of images depends on $\Delta$ and the number of detected photons, $N_{det}$. Only for axial particle positions far away from either of the focal detection planes the localization algorithm may fails to converge properly.

Differences generally arise in experiments directed to the Axial Localization Range: biplane detection is capable of localizing particles over a range nearly twice the value achievable by astigmatic detection. This is a relevant feature in imaging of thick biological samples and, therefore, the biplane mode seems to be a favorable mode for these applications. The fact that the signal in biplane detection is spread over double the number of pixels does not have a detectable negative effect in the experimental setup.

As mentioned above, the localization algorithm works independently of a theoretical model function and instead uses experimentally obtained reference data sets. This enables the algorithm to account for experimental deviations from perfect theoretical descriptions that are often difficult to include accurately in theoretical models and, also, reduces artifacts in the localization process. Additionally, complex theoretical models that cannot be described by a simple formula are now accessible by numerically generating a reference data set to feed into the algorithm. Small systematic deviations of the determined positions from actual positions can result from differences between used reference data sets and data generated during imaging, or from the fact that the reference data set data set is of finite size and can be readily corrected by proper calibration curves.

More relevantly, the localization algorithm allows general applicability to a range of 3D localization strategies without a need to develop individual theoretical model functions for every case. Additionally, it can be readily applied to recently reported detection schemes of iPALM and double-helix reference data sets. The iPALM detection scheme is described in more detail in an article titled "Interferometric fluorescent super-resolution microscopy resolves 3D cellular ultrastructure" by G. Shtengel, J. A. Galbraith, C. G. Galbraith, J. Lippincott-Schwartz, J. M. Gillete, S. Naley, R. Sougrat, C. M. Waterman, P. Kanchanawong, M. W. Davidson, R. D. Fetter, and H. F. Hess (Proc. Natl. Acad. Sci. USA 106, 3125-3130, 2009), which is incorporated by reference in its entirety. The double-helix reference data sets detection scheme is described in more detail in an article titled "Three-dimensional, single-molecule fluorescence imaging beyond the diffraction limit by using a double-helix point spread function" by S. R. Pavani, M> A. Thompson, J. S. Biteen, S. J. Lord, N. Liu, R. J> Twieg, R. Piestun, and W. E. Moerner (Proc. Natl. Acad. Sci. USA 106, 2995-2999, 2009), which is incorporated by reference in its entirety.

Furthermore, the localization algorithm is not limited to the five fitting parameters identified below (*i.e.*, *x*-position, *y*-position, *z*-position, amplitude, and background) or to 3D reference data sets. The localization algorithm can be readily expanded to include parameters such as interference phase, polarization, or wavelength by providing experimental reference data set sets that provide the necessary information in a fourth, fifth, or even higher dimension. Alternatively, less parameters and dimensions are possible, allowing for application to 2D imaging.

### Software

Image acquisition software that controls camera and piezo actuator parameters may be written, for example, using LabVIEW 8.2 software in Windows XP, the software being available from National Instruments Corp., Austin, Texas. Recorded data is stored in a raw data format that is later analyzed by separate analysis software programmed in C, which may run on a Linux computer cluster (*e.g.*, 31 compute nodes, each equipped with two dual-core AMD Opteron processors and 16 GB of RAM and connected by a single gigabit Ethernet network).

As a brief overview, ROIs corresponding to an illuminated field of view are cut out automatically. In biplane detection mode, the two ROIs in every frame representing the two detected planes are co-registered by slightly tilting and magnifying one ROI according to earlier determined calibration values. Particles are identified as the brightest pixels in smoothed versions of the ROIs. For every identified particle, one ROI of 15 $\times$ 15 pixels at 2 $\times$ 2 binning (corresponding to 1.9 $\mu$m $\times$ 1.9 $\mu$m in the sample) is cut out from the non-smoothed data centered on the identified brightest pixel in the astigmatic (biplane) detection mode. This data is, then, corrected for an electronic offset in the signal stemming from the camera, translated from counts into number of photons, and fed into the fit algorithm.

The fit algorithm provides the best estimates for the three spatial particle coordinates of the particle, as well as the amplitude and a background value of the particle. The coordinates, amplitude, and/or background value are stored together with other parameters that indicate quality of the fit (*e.g.*, $\chi^2$-values, number of iterations before convergence, etc.) in ASCII data lists. These lists are later compiled into the data presented below using, for example, such computer programs like Microsoft Excel, Origin (OriginLab, Northampton, MA), and LabVIEW.

The same software, especially the same fit algorithm, may be applied to data from both imaging modes with the only difference being that in biplane mode two ROIs are used instead of one. Combined with the required minimal changes in the optical setup, this warrants optimal conditions for a direct and thorough comparison of the two methods of 3D localization.

**Fit Algorithm**

The fit algorithm, also referred to as a particle localization routine, performs for every identified particle a least-squares fit based on the Nelder-Mead downhill simplex method. This method is described in more detail in an article titled "Numerical Recipes: The Art of Scientific Computing" by W. H. Press, S. A. Teukolsky, W. T. Vetterling, and B. P. Flannery (Cambridge University Press, 2007), which is incorporated by reference in its entirety. This algorithm, in short, finds the best fit by successively contracting an *n*-dimensional polytope ("simplex" with *m*+1 vertices) around the minimum of the figure-of-merit function in *m*-dimensional parameter space.

The figure-of-merit function, $\chi^2$, is calculated as squares of the error-weighted differences between the observed number of photons, $n_j$, and a model function, *F*, which depends on a set of fit parameter values summed over all pixels, *j*, which describe the image of an identified particle:

$$\chi^2(v,b,\mathbf{a}) = \sum_j \left( \frac{n_j - F_{v,b,\mathbf{a}}(\mathbf{x}_j)}{\sigma_j} \right)^2 \qquad (1)$$

The 3D positions, $\mathbf{x}_j$, describe the coordinates in the sample and correspond to a lattice of 15 × 15 × 2 or 15 × 15 × 1 extracted pixels in biplane and astigmatic detection mode, respectively. Alternatively, the 3D positions can represent any distribution matching the experimental imaging conditions. The estimated statistical error of $n_j$ - $\sigma_j$ - is assumed to be $n_j^{1/2}$ because shot noise is generally the main error contribution.

To fit the particle data, the model function $F_{v,b,\mathbf{a}}(\mathbf{x}) = vh_{\mathbf{a}}(\mathbf{x}) + b$ depends on *m* = 5 parameters. Specifically, the 5 parameters are (1-3) the particle's 3D position a = ($a_x$, $a_y$, $a_z$), (4) the number of photons, *v*, at the intensity maximum detected over the area of one pixel, and (5) the number of background photons, *b*, per pixel. The normalized instrument response at point **x** for a particle located at position **a** is described by $h_{\mathbf{a}}(\mathbf{x})$ and is derived from experimentally obtained reference data sets.

The reference data set $h_0(\xi_l)$ is defined for a lattice of voxel coordinates $\xi_l$. The required values $h_{\mathbf{a}}(\mathbf{x}_j)$ have to be determined from the reference data set by interpolation, making use of the fact that for a translationally invariant system $h_{\mathbf{a}}(\mathbf{x}) = h_0(\mathbf{x} - \mathbf{a})$. Simple linear interpolation and related methods generate points of non-differentiability that can cause failure of proper convergence of the simplex method and induce localization artifacts. To address this issue, the following interpolation method based on Fourier transforms has been developed.

The problem of estimating the value of a sampled function at a certain point of interest, **x - a** can be interpreted as determining the function value at the nearest node $\xi_l$ after shifting the whole function by the amount necessary to make (**x - a**) coincide with $\xi_l$. This shift can be achieved by convolving the function with a Dirac delta distribution:

$$h_{\mathbf{a}}(\mathbf{x}_j) = h_0(\xi_l) \otimes \delta(\xi_l - \mathbf{D}_{\mathbf{a}}(\mathbf{x}_j)) \qquad (2),$$

where $\mathbf{D}_{\mathbf{a}}(\mathbf{x}_j) = \xi_l - (\mathbf{x}_j - \mathbf{a})$ describes the vector between the position $\mathbf{x}_j$ - **a** and its closest neighbor $\xi_l$. In Fourier space the convolution assumes the simple form of a multiplication,

$$FT\{h_{\mathbf{a}}(\mathbf{x}_j)\} = H_0(\kappa_l) \times e^{-i\kappa_l \mathbf{D}_{\mathbf{a}}(\mathbf{x}_j)} \qquad (3).$$

$H_0(\kappa_l)$ is the optical transfer function ("OTF") of the system and is calculated once at the beginning of the fit procedure as the Fourier transform of $h_0(\xi_l)$. Multiplication with the parameter-dependent phase factor $\exp(-i\kappa_l \mathbf{D_a}(\mathbf{x}_j))$ and inverse Fourier transform yield the shifted reference data set $h_\mathbf{a}(\mathbf{x}_j)$.

It can be easily realized that the spacing of the pixel positions, $\mathbf{x}_j$, is an integer multiple of the spacing of the reference data set nodes $\xi_l$. In this case, $\mathbf{D_a}(\mathbf{x})$ is independent of $\mathbf{x}_j$ and a single inverse Fourier transformation of Eq. 3 is sufficient to find all the reference data set values required to calculate $\chi^2$ for a given shift $\mathbf{a}$.

Because of small experimental differences between the two biplane detection reference data sets, we use a slight modification of the described method that performs the reference data set translation as described by Eq. 3 simultaneously for both reference data sets. Values $h_\mathbf{a}(\mathbf{x}_j)$ are extracted from the appropriate OTFs according to the detection plane $\mathbf{x}_j$ in which the values $h_\mathbf{a}(\mathbf{x}_j)$ are located. For calculating the discrete Fourier transforms, for example, the fit algorithm can use the freely available FFTW by M. Frigo and S. G. Johnson (http://www.fftw.org, 2008), which is incorporated by reference in its entirety.

**Sample**

In the performed experiments, fluorescent latex beads of 100 nm diameter with an emission maximum at 560 nm (F-8800, Invitrogen, Carlsbad, California) were imaged. Beads were adhered on poly-L-lysine coated (Sigma-Aldrich, St. Louis, MO) cover slips, immersed in water and mounted on a slide. Bead density was chosen so low, that only about eight to twelve beads were visible in the field of view when imaging. This guaranteed that fluorescence from neighboring particles was not influencing the analysis.

**Generation of the Reference Data Set**

In the localization algorithm, an experimentally obtained reference data set (also referred to as a point-spread function) replaces theoretical models used elsewhere. To rule out localization artifacts caused by this reference data set, great care was exercised in its generation during performed experiments. The same bead samples as in later experiments were imaged at maximum electron-multiplying gain of the camera without pixel binning. Single frames were recorded with acquisition times of 30 ms at 50 nm axial piezo steps over a range of 10 $\mu$m.

Typically, during performed experiments, approximately 3,000 photons were detected from each bead at each $z$-position near the focal plane. Single beads were identified visually from the recorded data stacks, and ROIs of 3.8 $\mu$m $\times$ 3.8 $\mu$m size centered on the signal maximum were extracted. In the case of biplane detection, stacks were cut out for both recorded planes resulting in two correlated reference data sets. The extracted stacks were loaded into the data processing software Imspector (written by Dr. Andreas Schoenle, Max Planck Institute for Biophysical Chemistry, Goettingen, Germany, and available via Max-Planck-Innovation GmbH, Munich, Germany).

In Imspector, the background was removed and the data was corrected for bleaching that had occurred during the imaging process. The reference data sets were then cut to a size of approximately 3.8 $\mu$m $\times$ 3.8 $\mu$m $\times$ 7.5 $\mu$m with the reference data set centered in the middle. In biplane mode, both reference data sets were cut in an identical way such that (i) the stack centers were located axially in the middle between the two reference data set centers and (ii) the reference data set centers maintained their original axial distance. To reduce noise, the reference data sets were resampled to voxel sizes close to the resolution limit (x = y = 127 nm, z = 200 nm).

The assured maximum processing speed in the fit algorithm, due to the inclusion of Fourier transformation steps, depends on the number of reference data set voxels without altering the optical characteristics of the original reference data set. The reference data set has been further normalized to a maximum value of 1 for easier determination of reasonable start parameters for the fit algorithm. In biplane mode, the brighter reference data set was normalized to 1 and the other reference data set was normalized to a lower value.

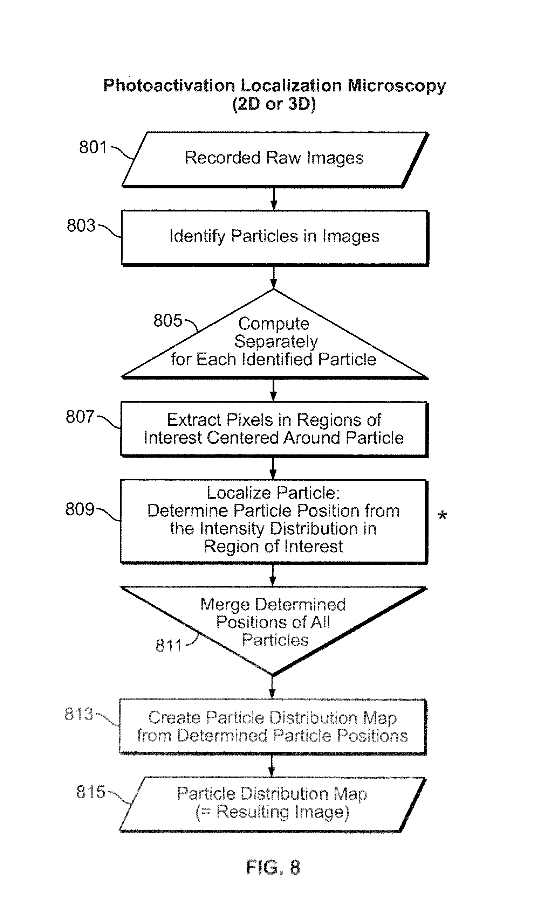

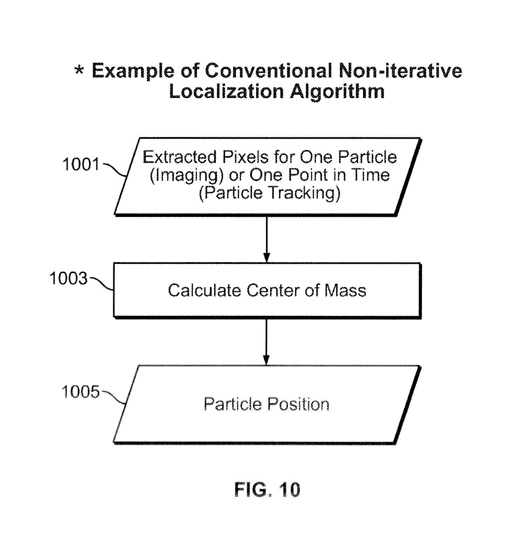

Referring to FIG. 8, an exemplary photoactivation localization microscopy method in accordance with the features described above includes providing recorded raw images (801) from which particles are identified in images (803). The photoactivation localization microscopy method can be performed in both 2D and 3D. A computation is made separately for each identified particle (805) and pixels are extracted in regions of interest centered around each of the identified particles (807). Each identified particle is localized by determining the particle position from the intensity distribution in the region of interest (809). Additional details regarding the localization of each identified particle is provided in FIGs. 10-12. The determined positions of all the particles are merged (811) and a particle distribution map is created from the determined particle positions (813). The particle distribution map is provided as a resulting image (815).

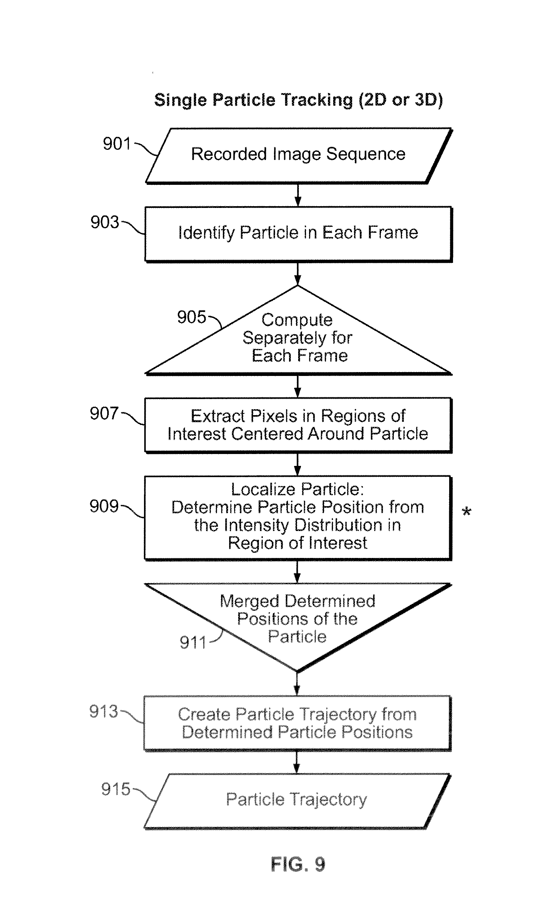

Referring to FIG. 9, an exemplary single particle tracking method in accordance with the features described above includes providing a recorded image sequence (901) from which a particle is identified in each frame (903). The single particle tracking method can be performed in both 2D and 3D. A computation is made separately for each frame (905) and pixels are extracted in regions of interest centered around the particle (907). The particle is localized by determining the particle position from the intensity distribution in the region of interest (909). Additional details regarding the localization of each identified particle is provided in FIGs. 10-12. The determined positions of the particle are merged (911) and a particle trajectory is created from the determined particle positions (913). The resulting particle trajectory is provided (915).

Referring to FIG. 10, an example of a conventional non-iterative localization algorithm includes extracting pixels for one particle (imaging) or one point in time (particle tracking) (1001), wherein the center of mass is calculated (1003). The particle position is, then, determined (1005).

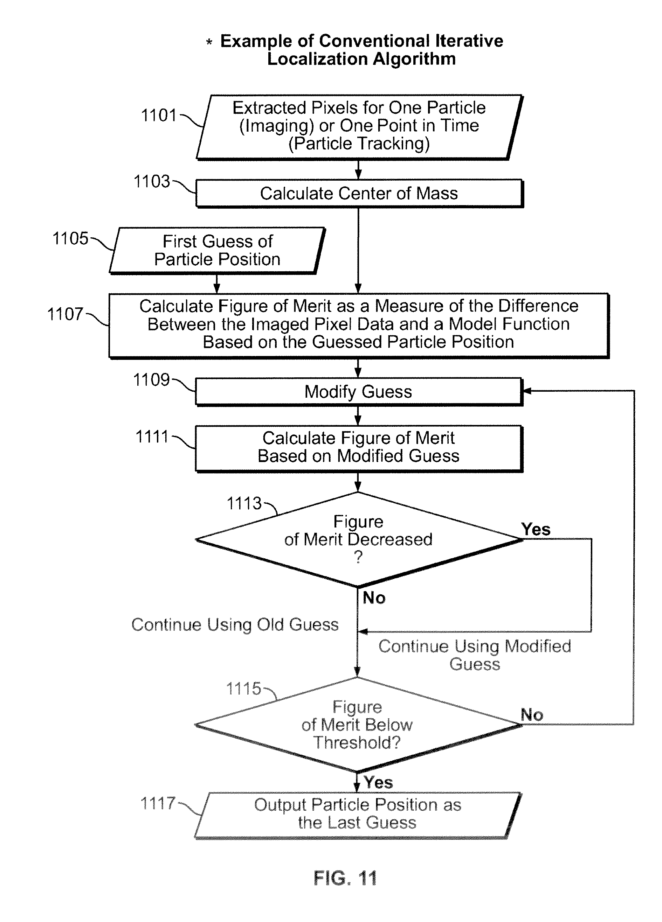

Referring to FIG. 11, an example of a conventional iterative localization algorithm includes extracting pixels for one particle (imaging) or one point in time (particle tracking) (1101). After calculating the center of mass (1103), a first guess of the particle position (1105) is provided to calculate the figure of merit as a measure of the difference between the imaged pixel data and a model function based on the guessed particle position (1107). The guess is modified (1109) and the figure of merit is calculated based on the modified guess (1111). If the figure of merit has not decreased (1113), the old guess is used to determine if the figure of merit is below a specific threshold (1115). If the figure of merit has decreased (1113), the modified guess is used to determine if the figure of merit is below the specific threshold (1115). Then, if the figure of merit is below the specific threshold, the particle position is outputted as the last guess (1117). However, if the figure of merit is not below the specific threshold, the guess is modified (1109) and the figure of merit is calculated based on the modified guess (1111).

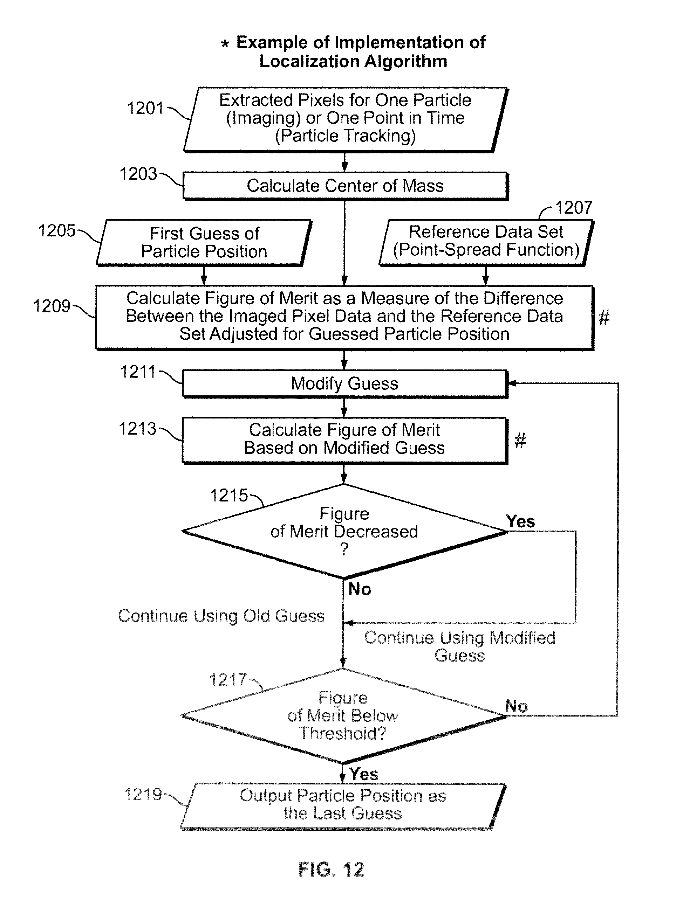

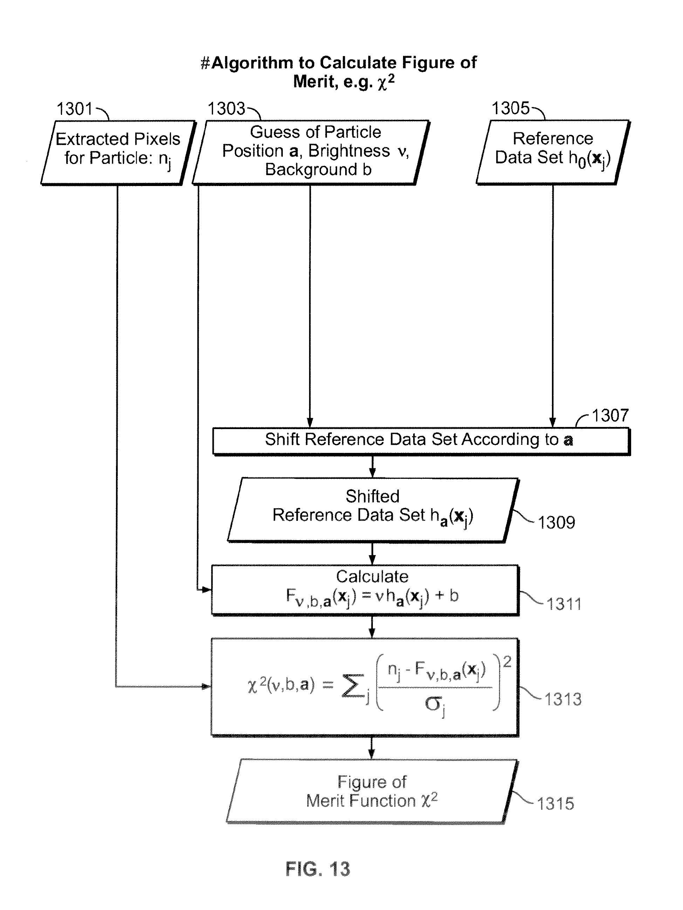

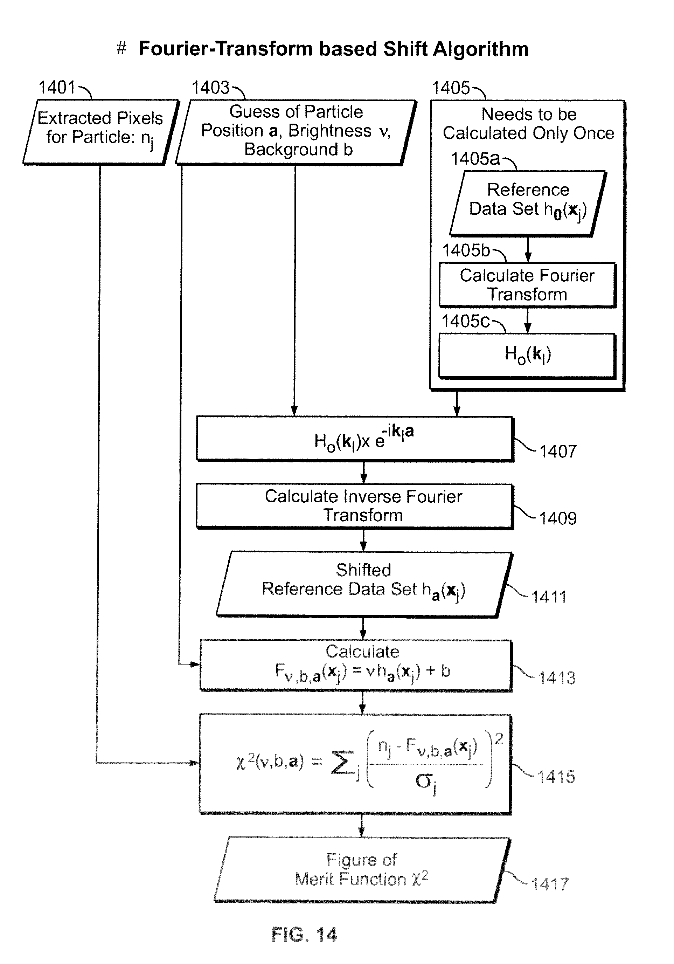

Referring to FIG. 12, in an exemplary implementation of the fit algorithm described above pixels are extracted for one particle (imaging) or one point in time (particle tracking) (1201). After calculating the center of mass (1203), a first guess of the particle position (1205) and a reference data set (1207) is provided to calculate the figure of merit as a measure of the difference between the imaged pixel data and the reference data set adjusted for guessed particle position (1209). Exemplary algorithms for calculating the figure of merit are further described below in reference to FIGs. 13 and 14.

The guess is modified (1211) and the figure of merit is calculated based on the modified guess (1213). If the figure of merit has not decreased (1215), the old guess is used to determine if the figure of merit is below a specific threshold (1217). If the figure of merit has decreased (1215), the modified guess is used to determine if the figure of merit is below the specific threshold (1217). Then, if the figure of merit is below the specific threshold, the particle position is outputted as the last guess (1219). However, if the figure of merit is not below the specific threshold, the guess is modified (1211) and the figure of merit is calculated based on the modified guess (1213).

Referring to FIG. 13, an algorithm for calculating the figure of merit includes extracting pixels for a particle (1301), guessing the particle position, brightness, and background (1303), and providing the reference data set (1305). The reference data set is shifted in accordance with the particle position (1307) and the shifted reference data set (1309) and the particle position, brightness, and background are provided for calculating the model function $Fv,b,\mathbf{a}(\mathbf{x}j) = vh\mathbf{a}(\mathbf{x}j) + b$ (1311). The figure of merit is calculated (1313) based on the model function and the extracted pixels for the particle and the figure of the merit function is provided (1315).

Referring to FIG. 14, an exemplary embodiment for a Fourier-transform based Shift Algorithm includes extracting pixels for a particle (1401), and guessing the particle position, brightness, and background (1403). A calculation (1405) is performed to obtain a reference data set (1405a), a Fourier Transform (1405b), and the OTF (1405c). The OTF is multiplied with a parameter-dependent phase factor (1407), based on the particle position, brightness, and background. The inverse Fourier Transform is calculated (1409), providing a shifted reference data set (1411). The model function $Fv,b,\mathbf{a}(\mathbf{x}j) = vh\mathbf{a}(\mathbf{x}j) + b$ is calculated (1413) based on the shifted reference data set and the particle position, brightness, and background. The figure of merit is calculated (1415) based on the model function and the extracted pixels for the particle and the figure of the merit function is provided (1417).

Each of these embodiments and obvious variations thereof is contemplated as falling within the spirit and scope of the claimed invention, which is set forth in the following claims.

The invention further provides the following embodiments:

    1. A microscopy system configured for creating 3D images from individually localized probe molecules, the system comprising:

        a sample stage for mounting a sample having a plurality of photo-sensitive luminescent probes;
        an activation light source configured to illuminate the sample with an activation light, the activation light source being configured to activate probes of at least one probe subset of the plurality of photo-sensitive luminescent probes;
        a readout light source configured to illuminate the sample with a readout light, the readout light source being configured to cause luminescence light from the activated probes;
        a beam splitting device located in a detection light path that splits the luminescence light into at least two paths, the beam splitting device creating at least two detection planes that correspond to the same or different number of object planes of the sample;

at least one camera positioned to detect simultaneously the at least two detection planes, the number of object planes being represented in the camera by the same number of recorded regions of interest; and

a controller programmable to combine a signal from the regions of interest into a 3D data stack.

2. The microscopy system of embodiment 1, wherein the sample stage is moveable by the controller to image different object planes in the sample.

3. The microscopy system of embodiment 1, wherein the detected luminescence from the activated probes is fluorescence.

4. The microscopy system of embodiment 1, wherein the activation of the activated probes is achieved by a non-linear process limiting the activation to a plane of diffraction-limited thickness.

5. The microscopy system of embodiment 1, wherein a wavelength of the readout light source is selected to minimize activation of inactive probes of the plurality of photo-sensitive probes.

6. The microscopy system of embodiment 1, wherein the activation light source and the readout light source is the same.

7. The microscopy system of embodiment 1, wherein the at least one camera is a CCD camera.

8. The microscopy system of embodiment 1, wherein the at least one camera is a single camera, the recorded regions of interest being arranged on the single camera such that they are well separated to avoid cross-talk.

9. The microscopy system of embodiment 1, wherein at least some of the recorded regions of interest are detected at different wavelengths via suitable detection filters.

10. The microscopy system of embodiment 1, wherein at least some of the recorded regions of interest are detected at different polarization directions via suitable polarization optics.

11. The microscopy system of embodiment 1, wherein the activated probes are spatially separated by at least a microscope resolution.

12. A method for creating 3D images from individually localized probe molecules, the method comprising:

(A) mounting a sample on a sample stage, the sample having a plurality of photo-sensitive luminescent probes;
(B) in response to illuminating the sample with an activation light, activating probes of at least one probe subset of the plurality of photo-sensitive luminescent probes;
(C) in response to illuminating the sample with a readout light, causing luminescence light from the activated probes;
(D) splitting the luminescence light into at least two paths to create at least two detection planes, the at least two detection planes corresponding to the same or different object planes in the sample;
(E) detecting simultaneously the at least two detection planes via a camera;
(F) recording the object planes in corresponding recorded regions of interest in the camera; and
(G) combining a signal from the regions of interest into a 3D data stack.

13. The method of embodiment 12, further comprising moving the sample stage via a controller to image different object planes in the sample.

14. The method of embodiment 12, further comprising limiting the activating to a plane of diffraction-limited thickness.

15. The method of embodiment 12, wherein a wavelength of the readout light source is selected to minimize activation of inactive probes of the plurality of photo-sensitive probes.

16. The method of embodiment 12, further comprising arranging the recorded regions of interest on a single camera such that hey are well separated to avoid cross-talk.

17. The method of embodiment 12, further comprising

(H) deactivating the activated probes of the at least one probe subset;

(I) repeating (B)-(G) for at least one more subset of probes of the plurality of photo-sensitive luminescent probes; and

(J) based on localized three-dimensional positions of the activated probes of the at least one probe subset and the at least one more subset of probes, constructing a 3D image of the sample.

18. A microscopy system configured for tracking microscopic particles in 3D, the system comprising:

a sample comprising luminescence particles;

a sample stage for mounting the sample;

at least one light source configured to illuminate an area of the sample, the at least one light source causing luminescence light from primarily one tracked particle of the luminescence particles;

a beam-steering device configured to selectively move a light beam to illuminate different areas of the sample such that the luminescence light is detected;

a beam splitting device located in a detection light path that splits the luminescence light into at least two paths, the beam splitting device creating at least two detection planes that correspond to different object planes in the sample

at least one camera positioned to detect simultaneously the at least two detection planes, the number of object planes being represented in the camera by the same number of recorded regions of interest; and

a controller programmable to

combine a signal from the recorded regions of interest,

determine a 3D trajectory of the particle at each time point of a recorded data sequence,

move the beam-steering device to illuminate the different areas of the sample in accordance with corresponding positions of the one tracked particle.

19. The microscopy system of embodiment 18, wherein the controller is further programmable to move the sample stage to track motion of the one tracked particle in at least one direction.

20. The microscopy system of embodiment 18, wherein detected luminescence light from the one tracked particle is fluorescence light.

21. The microscopy system of embodiment 18, wherein detected luminescence light from the one tracked particle is scattered light.

22. The microscopy system of embodiment 18, wherein the luminescence particles are photo-activated.

23. The microscopy system of embodiment 18, wherein the light source is a laser.

24. The microscopy system of embodiment 23, wherein the luminescence light is created in a non-linear way, the luminescence light being limited to a focal region of the laser centered around the one tracked particle.

25. The microscopy system of embodiment 18, wherein the beam-steering device includes a piezo-driven tiltable mirror that moves an illuminated area laterally to follow the one tracked particle.

26. The microscopy system of embodiment 18, wherein the beam-steering device includes a focusing optical element that moves illumination and detection focal planes axially to follow the one tracked particle.

27. The microscopy system of embodiment 18, wherein the beam-steering device includes a phase-modulating device that moves an illuminated area laterally and illumination and detection focal planes axially to follow the one tracked particle.

28. The microscopy system of embodiment 18, wherein the at least one camera is a CCD camera.

29. The microscopy system of embodiment 18, wherein each of the recorded regions of interest includes a small number of pixels to limit the amount of processed data.

30. The microscopy system of embodiment 18, wherein the recorded regions of interest are arranged in the same pixel lines of the at least one camera to optimize readout time.

31. The microscopy system of embodiment 18, wherein another luminescence color is detected to enable correlative studies of the one tracked particle movement.

32. The microscopy system of embodiment 18, wherein at least one illuminated area of the sample has a diameter that is less than about three times an Airy disk diameter.

33. A method for tracking microscopic particles in 3D, the method comprising:

mounting a sample on a sample stage, the sample including luminescence particles;
illuminating an area of the sample to cause luminescence light from primarily one particle of the luminescence particles;
selectively moving a light beam to illuminate different areas of the sample to track movement of the one particle, the different areas including the small area of the sample and corresponding to respective positions of the one particle;
splitting the luminescence light into at least two paths to create at least two detection planes that correspond to the same or different number of object planes in the sample;
detecting simultaneously the at least two detection planes;
representing in a camera the number of object planes by the same number of recorded regions of interest; and
based on a combined signal from the recorded regions of interest, determining a 3D trajectory of the one particle at each time point of a recorded data sequence.

34. The method of embodiment 33, further comprising moving the sample stage to track motion of the one particle in at least one direction.

35. The method of embodiment 33, further comprising creating the luminescence light in a non-linear way, the luminescence light being limited to a focal region of a laser centered around the one particle.

36. The method of embodiment 33, wherein a piezo-driven tiltable mirror moves an illuminated area laterally to follow the one particle.

37. The method of embodiment 33, wherein a focusing optical element moves illumination and detection focal planes axially to follow the one particle.

38. The method of embodiment 33, wherein a phase-modulating device moves an illuminated area laterally and illumination and detection focal planes axially to follow the one particle.

39. The method of embodiment 33, further comprising arranging the recorded regions of interest in the same pixel lines of at least one camera to optimize readout time.

40. The method of embodiment 33, further comprising detecting another luminescence color to enable correlative studies of the one particle movement.

41. A microscopy system configured for creating 3D images from individually localized probe molecules, the system comprising:

an activation light source configured to illuminate a sample with an activation light, the activation light source being configured to activate probes of at least one probe subset of the plurality of photo-sensitive luminescent probes;
a readout light source configured to illuminate the sample with a readout light, the readout light source being configured to cause luminescence light from the activated probes;
a beam splitting device located in a detection light path that splits the luminescence light into at least two paths, the beam splitting device creating at least two detection planes that correspond to the same or different number of object planes of the sample;
at least one camera positioned to detect simultaneously the at least two detection planes, the number of object planes being represented in the camera by the same number of recorded regions of interest; and
a controller programmable to

combine a signal from the regions of interest into a 3D data stack,

calculate a figure of merit as a measure of the difference between imaged pixel data and a reference data set modifiable by at least one parameter, and

optimize the figure of merit by adjusting the at least one parameter.

42. The microscopy system of embodiment 41, wherein the controller is further programmable to perform a least-squares fit for finding a best fit by successively contracting an $n$-dimensional polytope around a minimum of a figure-of-merit function in $m$-dimensional parameter space.

43. The microscopy system of embodiment 41, wherein the controller is further programmable to calculate the figure-of-merit function as a square of error-weighted differences between observed number of photons and a model function that depends on a set of fit parameter values summed over all pixels,

44. The microscopy system of embodiment 41, wherein the figure-of-merit function $\chi^2$ is expressed as

$$\chi^2(v,b,\mathbf{a}) = \sum_j \left( \frac{n_j - F_{v,b,\mathbf{a}}(\mathbf{x}_j)}{\sigma_j} \right)^2,$$

wherein $\mathbf{x}_j$ describes 3D coordinates in the sample, $n_j$, is the observed number of photons, $j$ is the number of all pixels, $F_{v,b,\mathbf{a}}(\mathbf{x}) = vh_{\mathbf{a}}(\mathbf{x}) + b$, a is the particle 3D position in a specific dimension, $v$ is the number of photons at the intensity maximum detected over the area of one pixel, $b$ is the number of background photons per pixel, and $h_{\mathbf{a}}(\mathbf{x})$ a describes the normalized instrument response at point x for a particle located at position a.

45. The microscopy system of embodiment 41, wherein fitting particle data is based on 5 parameters, including (i) particle 3D position in x direction $a_x$, (ii) particle 3D position in y direction $a_y$, (iii) particle 3D position in x direction $a_z$, (iv) number of photons $v$ at the intensity maximum detected over the area of one pixel, and (v) the number of background photons b per pixel.

46. The microscopy system of embodiment 41, wherein the reference data set is defined for a lattice of voxel coordinates $\xi_l$, the controller being further programmable to determine values $h_{\mathbf{a}}(\mathbf{x}_j)$ from the reference data set by interpolation.

47. The microscopy system of embodiment 46, wherein interpolation is based on Fourier transforms.

48. The microscopy system of embodiment 46, wherein the controller is further programmable to convolve the reference data set with a shifted Dirac delta distribution.

49. The microscopy system of embodiment 41, wherein the at least one parameter includes a particle position, an amplitude, and a background signal.

50. The microscopy system of embodiment 41, wherein the at least one parameter includes an interference phase parameter, a polarization parameter, and a wavelength parameter.

**Claims**

1. A microscopy system configured for tracking microscopic particles in 3D, the system comprising:

a sample comprising luminescence particles;
a sample stage for mounting the sample;
at least one light source configured to illuminate an area of the sample, the at least one light source causing luminescence light from primarily one tracked particle of the luminescence particles;
a beam-steering device configured to selectively move a light beam to illuminate different areas of the sample such that the luminescence light is detected;
a beam-splitting device located in a detection light path that splits the luminescence light into at least two paths, the beam-splitting device creating at least two detection planes that correspond to different object planes in the sample;

at least one camera positioned to detect simultaneously the at least two detection planes, the number of object planes being represented in the camera by the same number of recorded regions of interest; and

a controller programmable to combine a signal from the recorded regions of interest, determine a 3D trajectory of the particle at each time point of a recorded data sequence, move the beam-steering device to illuminate the different areas of the sample in accordance with corresponding positions of the one tracked particle.

2. The microscopy system of claim 1, wherein the controller is further programmable to move the sample stage to track motion of the one tracked particle in at least one direction.

3. The microscopy system of claim 1, wherein detected luminescence light from the one tracked particle is scattered light.

4. The microscopy system of claim 1, wherein the luminescence particles are photo-activated.

5. The microscopy system of claim 1, wherein the luminescence light is created in a non-linear way, the luminescence light being limited to a focal region of the laser centered around the one tracked particle.

6. The microscopy system of claim 1, wherein the beam-steering device includes a focusing optical element that moves illumination and detection focal planes axially to follow the one tracked particle.

7. The microscopy system of claim 1, wherein the beam-steering device includes a phase-modulating device that moves an illuminated area laterally and illumination and detection focal planes axially to follow the one tracked particle.

8. The microscopy system of claim 1, wherein each of the recorded regions of interest includes a small number of pixels to limit the amount of processed data.

9. The microscopy system of claim 1, wherein the recorded regions of interest are arranged in the same pixel lines of the at least one camera to optimize readout time.

10. The microscopy system of claim 1, wherein another luminescence color is detected to enable correlative studies of the one tracked particle movement.

11. The microscopy system of claim 1, wherein at least one illuminated area of the sample has a diameter that is less than about three times an Airy disk diameter.

12. A method for tracking microscopic particles in 3D, the method comprising:

mounting a sample on a sample stage, the sample including luminescence particles;

illuminating an area of the sample to cause luminescence light from primarily one particle of the luminescence particles;

selectively moving a light beam to illuminate different areas of the sample to track movement of the one particle, the different areas including the small area of the sample and corresponding to respective positions of the one particle;

splitting the luminescence light into at least two paths to create at least two detection planes that correspond to the same or different number of object planes in the sample;

detecting simultaneously the at least two detection planes;

representing in a camera the number of object planes by the same number of recorded regions of interest; and

based on a combined signal from the recorded regions of interest, determining a 3D trajectory of the one particle at each time point of a recorded data sequence.

13. The method of claim 12, further comprising moving the sample stage to track motion of the one particle in at least one direction.

14. The method of claim 12, further comprising creating the luminescence light in a non-linear way, the luminescence light being limited to a focal region of a laser centered around the one particle.

15. The method of claim 12, wherein a focusing optical element moves illumination and detection focal planes axially to follow the one particle.

16. The method of claim 12, wherein a phase-modulating device moves an illuminated area laterally and illumination and detection focal planes axially to follow the one particle.

17. The method of claim 12, further comprising arranging the recorded regions of interest in the same pixel lines of at least one camera to optimize readout time.

18. The method of claim 12, further comprising detecting another luminescence color to enable correlative studies of the one particle movement.

FIG. 1

FIG. 2

FIG. 3

EP 2 631 633 A1

signal [a.u.]

74.9 nm

0

z [μm]

1

**FIG. 4A**

x

y

z

z

**FIG. 4B**

*FIG. 5A*

*FIG. 5B*

*FIG. 5C*

*FIG. 5D*

*FIG. 5E*

*FIG. 5F*

FIG. 6

FIG. 7A

FIG. 7B

FIG. 7C

## Photoactivation Localization Microscopy
## (2D or 3D)

801 — Recorded Raw Images

803 — Identify Particles in Images

805 — Compute Separately for Each Identified Particle

807 — Extract Pixels in Regions of Interest Centered Around Particle

809 — Localize Particle: Determine Particle Position from the Intensity Distribution in Region of Interest    *

811 — Merge Determined Positions of All Particles

813 — Create Particle Distribution Map from Determined Particle Positions

815 — Particle Distribution Map (= Resulting Image)

FIG. 8

## Single Particle Tracking (2D or 3D)

901 — Recorded Image Sequence

903 — Identify Particle in Each Frame

905 — Compute Separately for Each Frame

907 — Extract Pixels in Regions of Interest Centered Around Particle

909 — Localize Particle: Determine Particle Position from the Intensity Distribution in Region of Interest   *

911 — Merged Determined Positions of the Particle

913 — Create Particle Trajectory from Determined Particle Positions

915 — Particle Trajectory

FIG. 9

* **Example of Conventional Non-iterative**
**Localization Algorithm**

1001 — Extracted Pixels for One Particle
(Imaging) or One Point in Time
(Particle Tracking)

1003 — Calculate Center of Mass

1005 — Particle Position

FIG. 10

## * Example of Conventional Iterative Localization Algorithm

1101 — Extracted Pixels for One Particle (Imaging) or One Point in Time (Particle Tracking)

1103 — Calculate Center of Mass

1105 — First Guess of Particle Position

1107 — Calculate Figure of Merit as a Measure of the Difference Between the Imaged Pixel Data and a Model Function Based on the Guessed Particle Position

1109 — Modify Guess

1111 — Calculate Figure of Merit Based on Modified Guess

1113 — Figure of Merit Decreased ? — Yes

No

Continue Using Old Guess

Continue Using Modified Guess

1115 — Figure of Merit Below Threshold? — No

Yes

1117 — Output Particle Position as the Last Guess

**FIG. 11**

* **Example of Implementation of
Localization Algorithm**

1201 — Extracted Pixels for One Particle
(Imaging) or One Point in Time
(Particle Tracking)

1203 — Calculate Center of Mass

1205 — First Guess of
Particle Position

1207 — Reference Data Set
(Point-Spread Function)

1209 — Calculate Figure of Merit as a Measure of the Difference
Between the Imaged Pixel Data and the Reference Data
Set Adjusted for Guessed Particle Position    #

1211 — Modify Guess

1213 — Calculate Figure of Merit
Based on Modified Guess    #

1215 — Figure
of Merit Decreased
?    **Yes**

**No**

Continue Using Old Guess

Continue Using Modified
Guess

1217 — Figure
of Merit Below
Threshold?    **No**

**Yes**

1219 — Output Particle Position as
the Last Guess

**FIG. 12**

31

# #Algorithm to Calculate Figure of Merit, e.g. $\chi^2$

1301

> Extracted Pixels
> for Particle: $n_j$

1303

> Guess of Particle
> Position **a**, Brightness $v$,
> Background $b$

1305

> Reference
> Data Set $h_0(\mathbf{x}_j)$

1307

Shift Reference Data Set According to **a**

> Shifted
> Reference Data Set $h_\mathbf{a}(\mathbf{x}_j)$

1309

Calculate
$$F_{v,b,\mathbf{a}}(\mathbf{x}_j) = v\,h_\mathbf{a}(\mathbf{x}_j) + b$$

1311

$$\chi^2(v,b,\mathbf{a}) = \sum_j \left( \frac{n_j - F_{v,b,\mathbf{a}}(\mathbf{x}_j)}{\sigma_j} \right)^2$$

1313

> Figure of
> Merit Function $\chi^2$

1315

FIG. 13

# **Fourier-Transform based Shift Algorithm**

1401 — Extracted Pixels for Particle: $n_j$

1403 — Guess of Particle Position **a**, Brightness $v$, Background $b$

1405 — Needs to be Calculated Only Once

1405a — Reference Data Set $h_0(\mathbf{x}_j)$

1405b — Calculate Fourier Transform

1405c — $H_0(\mathbf{k}_l)$

$H_0(\mathbf{k}_l) \times e^{-i\mathbf{k}_l \mathbf{a}}$ — 1407

Calculate Inverse Fourier Transform — 1409

Shifted Reference Data Set $h_{\mathbf{a}}(\mathbf{x}_j)$ — 1411

Calculate $F_{v,b,\mathbf{a}}(\mathbf{x}_j) = v\, h_{\mathbf{a}}(\mathbf{x}_j) + b$ — 1413

$$\chi^2(v,b,\mathbf{a}) = \sum_j \left( \frac{n_j - F_{v,b,\mathbf{a}}(\mathbf{x}_j)}{\sigma_j} \right)^2$$ — 1415

Figure of Merit Function $\chi^2$ — 1417

**FIG. 14**

Europäisches
Patentamt

European
Patent Office

Office européen
des brevets

# EUROPEAN SEARCH REPORT

Application Number

EP 13 16 8580

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2002/177885 A1 (EISFELD TIMOTHY M [US] ET AL) 28 November 2002 (2002-11-28) * figure 3 * * abstract * * paragraph [0048] - paragraph [0072] * ----- | 1-18 | INV. G01N21/64 G01N23/04 G01B11/24 G02B21/36 G06T9/00 |
| Y,D | TOPRAK E ET AL: "Three-Dimensional Particle Tracking via Bifocal Imaging", NANO LETTERS, ACS, US, vol. 7, no. 7, 11 July 2007 (2007-07-11), pages 2043-2045, XP002612729, ISSN: 1530-6984, DOI: 10.1021/NL0709120 [retrieved on 2007-06-21] * the whole document * ----- | 1-18 | G02B21/16 G02B27/58 H04N13/02 H04N13/00 |
| A,D | HESS S T ET AL: "Ultra-high resolution imaging by fluorescence photoactivation localization microscopy", BIOPHYSICAL JOURNAL, BIOPHYSICAL SOCIETY, US, vol. 91, no. 11, 1 December 2006 (2006-12-01), pages 4258-4272, XP008082813, ISSN: 0006-3495, DOI: 10.1529/BIOPHYSJ.106.091116 * abstract; figure 1 * ----- | 1-18 | |
| | -/-- | | TECHNICAL FIELDS SEARCHED (IPC) G02B G01N |

The present search report has been drawn up for all claims

| Place of search | Date of completion of the search | Examiner |
|---|---|---|
| Munich | 17 June 2013 | Windecker, Robert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 13 16 8580

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HUANG B ET AL: "Three-Dimensional Super-Resolution Imaging by Stochastic Optical Reconstruction Microscopy", SCIENCE, AMERICAN ASSOCIATION FOR THE ADVANCEMENT OF SCIENCE, WASHINGTON, DC; US, vol. 319, 8 February 2008 (2008-02-08), pages 810-813, XP002523347, ISSN: 0036-8075, DOI: 10.1126/SCIENCE.1153529 [retrieved on 2008-01-03] * the whole document * ----- | 1-18 | |
| A | WO 2006/127692 A2 (HESS HARALD F [US]; BETZIG ROBERT E [US]) 30 November 2006 (2006-11-30) * abstract * * figures 1-4 * * figures 8a-8d * * page 21, line 15 - page 24, line 2 * ----- | 1-18 | |
| A | PRABHAT P ET AL: "Simultaneous imaging of several focal planes in fluorescence microscopy for the study of cellular dynamics in 3D", PROCEEDINGS OF SPIE, SPIE - INTERNATIONAL SOCIETY FOR OPTICAL ENGINEERING, BELLINGHAM, WA, US, vol. 6090, 1 January 2006 (2006-01-01), pages 60900L-1, XP002523346, ISSN: 1605-7422, DOI: 10.1117/12.644343 [retrieved on 2006-02-23] * the whole document * ----- | 1-18 | TECHNICAL FIELDS SEARCHED (IPC) |

The present search report has been drawn up for all claims

| Place of search | Date of completion of the search | Examiner |
|---|---|---|
| Munich | 17 June 2013 | Windecker, Robert |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 13 16 8580

This annex lists the patent family members relating to the patent documents cited in the above-mentioned European search report.
The members are as contained in the European Patent Office EDP file on
The European Patent Office is in no way liable for these particulars which are merely given for the purpose of information.

17-06-2013

| Patent document cited in search report | | Publication date | Patent family member(s) | | Publication date |
|---|---|---|---|---|---|
| US 2002177885 | A1 | 28-11-2002 | AU | 3289202 A | 21-05-2002 |
| | | | AU | 2002232892 B2 | 26-06-2008 |
| | | | CA | 2426871 A1 | 16-05-2002 |
| | | | EP | 1344181 A2 | 17-09-2003 |
| | | | EP | 2363828 A1 | 07-09-2011 |
| | | | JP | 2004512845 A | 30-04-2004 |
| | | | JP | 2008263990 A | 06-11-2008 |
| | | | JP | 2009022295 A | 05-02-2009 |
| | | | JP | 2011206066 A | 20-10-2011 |
| | | | US | 2002177885 A1 | 28-11-2002 |
| | | | US | 2005047640 A1 | 03-03-2005 |
| | | | US | 2006251314 A1 | 09-11-2006 |
| | | | US | 2009191619 A1 | 30-07-2009 |
| | | | US | 2011254948 A1 | 20-10-2011 |
| | | | WO | 0237938 A2 | 16-05-2002 |
| WO 2006127692 | A2 | 30-11-2006 | CA | 2609653 A1 | 30-11-2006 |
| | | | EP | 1894010 A2 | 05-03-2008 |
| | | | EP | 2453237 A1 | 16-05-2012 |
| | | | EP | 2453238 A1 | 16-05-2012 |
| | | | EP | 2453239 A1 | 16-05-2012 |
| | | | EP | 2453240 A1 | 16-05-2012 |
| | | | EP | 2453241 A1 | 16-05-2012 |
| | | | JP | 4709278 B2 | 22-06-2011 |
| | | | JP | 2008542826 A | 27-11-2008 |
| | | | JP | 2011039065 A | 24-02-2011 |
| | | | US | 2008068588 A1 | 20-03-2008 |
| | | | US | 2008068589 A1 | 20-03-2008 |
| | | | US | 2008070322 A1 | 20-03-2008 |
| | | | US | 2008070323 A1 | 20-03-2008 |
| | | | US | 2008111086 A1 | 15-05-2008 |
| | | | US | 2009206251 A1 | 20-08-2009 |
| | | | US | 2010181497 A1 | 22-07-2010 |
| | | | US | 2011102787 A1 | 05-05-2011 |
| | | | US | 2013126759 A1 | 23-05-2013 |
| | | | WO | 2006127692 A2 | 30-11-2006 |

EPO FORM P0459

**EP 2 631 633 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **STEFAN W. HELL.** Far-Field Optical Nanoscopy. *Science,* 25 May 2007, vol. 316, 1153-1158
- **SAMUEL T. HESS et al.** UltraHigh Resolution Imaging by Fluorescence Photoactivation Localization Microscopy. *Biophysical Journal,* December 2006, vol. 91, 4258-4272
- **ERIC BETZIG et al.** Imaging Intracellular Fluorescent Proteins at Nanometer Resolution. *Science,* 15 September 2006, vol. 313, 1642-1645
- **MICHAEL J. RUST et al.** Sub-Diffraction-Limit Imaging by Stochastic Optical Reconstruction Microscopy. *Nature Methods / Advance Online Publication,* 09 August 2006
- **H. BOCK et al.** Resolution of $\lambda$/10 in Fluorescence Microscopy Using Fast Single Molecule Photo-Switching. *Applied Physics A,* 01 June 2007, vol. 88, 223-226
- **J. FOLLING et al.** Photochromic Rhodamines Provide Nanoscopy With Optical Sectioning. *Angew. Chem. Int. Ed.,* 2007, vol. 46, 6266-6270
- **AHMET YILDIZ et al.** Myosin V Walks Hand-Over-Hand: Single Fluorophore Imaging With 1.5-nanometers Localization. *Science,* 27 June 2003, vol. 300, 2061-2065
- **GERALD DONNERT et al.** Two-Color Far-Field Fluorescence Nanoscopy. *Biophysical Journal,* 06 February 2007, vol. L67-L69
- **M. BATES ; B. HUANG ; G.T. DEMPSEY ; X. ZHUANG.** *Science,* 2007, vol. 317, 1749-1753
- **SAMUEL T. HESS et al.** Dynamic Clustered Distribution of Hemagglutinin Resolved at 40 nanometers in Living Cell Membranes Discriminates Between Raft Theories. *Proc. Natl. Acad. Sci. USA,* 30 October 2007, vol. 104, 17370-17375

- **JOERG BEWERSDORF et al.** H2AX Chromatin Structures and Their Response to DNA Damage Revealed by 4Pi Microscopy. *Proc. Natl. Acad. Sci. USA,* 28 November 2006, vol. 103, 18137-18142
- **K. I. WILLIG ; B. HARKE ; R. MEDDA ; S. W. HELL.** *Nat. Methods,* 2007, vol. 4, 915-918
- **HUANG et al.** *Science,* 2008
- **V. LEVI ; Q. RUAN ; E. GRATTON.** 3-D Particle Tracking In A Two-Photon Microscope: Application To The Study Of Molecular Dynamics IN Cells. *Biophys. J.,* 2005, vol. 88 (4), 2919-28
- **E TOPRAK et al.** Three-Dimensional Particle Tracking Via Bifocal Imaging. *Nano Lett.,* 2007, vol. 7 (7), 2043-45
- **G. SHTENGEL ; J. A. GALBRAITH ; C. G. GALBRAITH ; J. LIPPINCOTT-SCHWARTZ ; J. M. GILLETE ; S. NALEY ; R. SOUGRAT ; C. M. WATERMAN ; P. KANCHANAWONG ; M. W. DAVIDSON.** Interferometric fluorescent super-resolution microscopy resolves 3D cellular ultrastructure. *Proc. Natl. Acad. Sci. USA,* 2009, vol. 106, 3125-3130
- **S. R. PAVANI ; M> A. THOMPSON ; J. S. BITEEN ; S. J. LORD ; N. LIU ; R. J> TWIEG ; R. PIESTUN ; W. E. MOERNER.** Three-dimensional, single-molecule fluorescence imaging beyond the diffraction limit by using a double-helix point spread function. *Proc. Natl. Acad. Sci. USA,* 2009, vol. 106, 2995-2999
- **W. H. PRESS ; S. A. TEUKOLSKY ; W. T. VETTERLING ; B. P. FLANNERY.** Numerical Recipes: The Art of Scientific Computing. Cambridge University Press, 2007
- **M. FRIGO ; S. G. JOHNSON.** *FFTW,* 2008, http://www.fftw.org
- **DR. ANDREAS SCHOENLE.** Max Planck Institute for Biophysical Chemistry, Goettingen, Germany. Max-Planck-Innovation GmbH